(19) **Europäisches Patentamt**

**European Patent Office**

**Office européen des brevets**

(11) **EP 1 461 954 B1**

(12) **EUROPEAN PATENT SPECIFICATION**

(45) Date of publication and mention
of the grant of the patent:
**07.06.2006 Bulletin 2006/23**

(51) Int Cl.:
*H04N 7/173* (2006.01)

(21) Application number: **02806090.3**

(86) International application number:
**PCT/JP2002/013783**

(22) Date of filing: **27.12.2002**

(87) International publication number:
**WO 2003/058953 (17.07.2003 Gazette 2003/29)**

(54) **DATA REPRODUCTION APPARATUS AND DATA REPRODUCTION METHOD**

GERÄT ZUM WIEDERGEBEN VON DATEN UND VERFAHREN ZUM WIEDERGEBEN VON DATEN

APPAREIL DE REPRODUCTION DE DONNEES ET PROCEDE DE REPRODUCTION DE DONNEES

(84) Designated Contracting States:
**DE FR GB**

(30) Priority: **28.12.2001 JP 2001401000**

(43) Date of publication of application:
**29.09.2004 Bulletin 2004/40**

(73) Proprietor: **MATSUSHITA ELECTRIC INDUSTRIAL CO., LTD.**
**Kadoma-shi, Osaka 571-8501 (JP)**

(72) Inventors:
• **TOMA, Tadamasa**
**Osaka 560-0085 (JP)**

• **MATSUI, Yoshinori**
**Ikoma-shi, Nara 630-0212 (JP)**

(74) Representative: **Eisenführ, Speiser & Partner**
**Patentanwälte Rechtsanwälte**
**Postfach 10 60 78**
**28060 Bremen (DE)**

(56) References cited:
**EP-A- 0 667 724**     **EP-A- 1 037 464**
**EP-A- 1 160 991**     **US-A- 6 028 631**
**US-A- 6 031 582**     **US-A1- 2001 012 051**

**Description**

TECHNICAL FIELD

The present invention relates to a data reproduction apparatus and a data reproduction method and, more particularly, to a process of reproducing coded data of multimedia data so as to suppress power consumption in a battery-operated data reproduction terminal.

BACKGROUND ART

In recent years, with advances in audio-visual data compression technologies, distribution of moving pictures on the Internet has become possible. Further, TS26.234 (Transparent end-to-end packet switched streaming service) has been standardized for distribution of moving pictures to radio terminals. So, in the future, propagation of information distribution services on portable terminals is expected. The above-mentioned TS26.234 standard has been defined by 3GPP (Third Generation Partnership Project) as an international organization for standardization which defines standards of reception terminals in radio communication networks.

Furthermore, in information distribution services, so-called "multimedia data" including data of moving pictures, still pictures, voices, characters, and the like have been distributed.

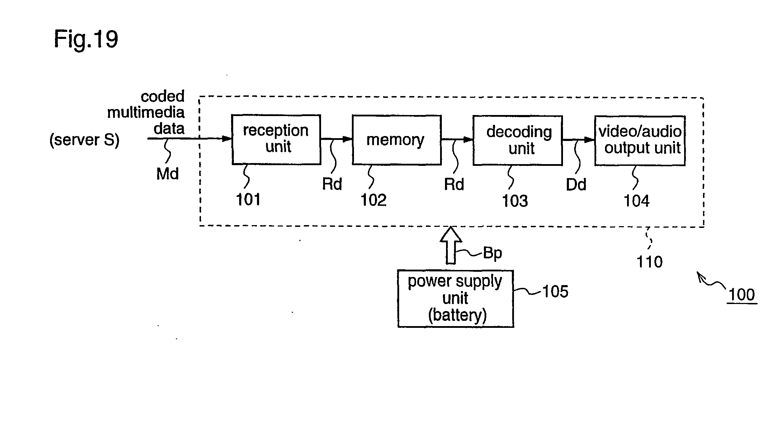

Figure 19 is a block diagram for explaining a conventional data reproduction apparatus.

A data reproduction apparatus 100 shown in figure 19 is a portable terminal having a data reproduction unit 110, and a power supply unit 105. The data reproduction unit 110 receives a multimedia data stream Md which is obtained by coding multimedia data (hereinafter also referred to as "coded multimedia data" or "coded data"), and reproduces the stream Md. The power supply unit 105 is provided with a battery as a power source, and supplies a power of the battery to the data reproduction unit 110.

The data reproduction unit 110 is provided with a reception unit 101 for receiving the coded multimedia data Md; a memory 102 for temporarily holding the output (received coded data) RMd from the reception unit 101; a decoding unit 103 for decoding the coded data RMd read from the memory 102 to output decoded data Dd; and a video/audio output unit 104 for performing image output (image display) or voice output on the basis of the decoded data Dd from the decoding unit 103.

The respective components 101~104 of the data reproduction unit 110 perform data processing with the power supplied from the battery 105. Further, the video/audio output unit 104 is provided with, for example, an audio output part (not shown) including a speaker or the like, and a display part (not shown) such as a liquid crystal monitor which performs image display.

Next, the operation of the data reproduction apparatus 100 will be described.

In the data reproduction apparatus 100, the respective units 101~105 constituting the data reproduction unit 110 are operated with the battery power that is supplied from the power supply unit 105.

When the coded multimedia data Md transmitted from a server S is input to the data reproduction apparatus 100, the data reproduction unit 110 performs reproduction of the coded multimedia data Md with the battery power supplied from the power supply unit 105.

To be specific, the reception unit 101 receives the coded data Md from the server S, and the received coded data RMd is stored in the memory 102. The decoding unit 103 decodes the coded data RMd read from the memory 102, and outputs decoded data Dd. Then, the video/audio output unit 104 performs voice output or image display on the basis of the decoded data, that is, the multimedia data Dd which is obtained by decoding of the coded data RMd.

However, in the process of reproducing the coded multimedia data (i.e., the process of receiving the coded multimedia data, decoding the data, and performing voice output or image display on the basis of the multimedia data obtained by the decoding), more power is required as compared with the case where only character data is displayed. Therefore, in the battery-operated data reproduction apparatus (portable terminal) as described above, frequent battery recharge is required when the apparatus performs reproduction of multimedia data.

In order to solve the above-mentioned problem, there has been proposed a battery-operated reproduction terminal which controls data reproduction according to an output voltage from a battery so as to suppress consumption of battery power. For example, Japanese Published Patent Application No. Hei.11-164321 discloses an image decoding apparatus for decoding a compressed image signal, in which display mode is switched from color display mode to monochromatic display mode when a power supply voltage becomes lower than a predetermined level.

However, in the method of controlling the data reproduction apparatus according to the output voltage of the battery as described above, when the battery output voltage is lowered, the display mode or the like is switched so as to suppress power consumption, and reproduction quality of data that is important to the user is undesirably degraded. On the other hand, when the battery output voltage is at a normal level, unimportant data is undesirably reproduced at higher quality than necessary, resulting in a waste of battery power.

The present invention is made to solve the above-described problems and has for its object to provide a data reproduction apparatus and a data reproduction method that can appropriately reduce power consumptic according to contents or the like of data to be reproduced, and that can utilize video distribution services or the like for long hours by a power supplied from a battery.

The European patent application EP 0 667 724 is directed towards a mobile radio transmission receiver for receiving signals from a transmitter which sequentially transmit sub-frames. The receiver in accordance with this document suspends its reception operation during the transmission period transmitting unnecessary sub-frames and realizes thereby a power saving mode.

DISCLOSURE OF THE INVENTION

According to the present invention (Claim 1), there is provided a data reproduction apparatus for receiving coded data of multimedia data and reproducing the coded data, which is operated by a power supplied from a battery, and this apparatus comprises: a reception unit for receiving the coded data; a decoding unit for decoding the received coded data to output decoded data; an output unit for outputting image or voice on the basis of the decoded data; and a control unit for restricting the operation of at least one of the reception unit, decoding unit, and output unit according to attributes of the multimedia data, so as to suppress consumption of the battery power, said apparatus being characterized in that said control unit judges, according to data structure of the coded data, that operation of which unit among the reception unit, decoding unit, and video/audio output unit can be restricted, and restricts the operation of the unit closer to an input end of the apparatus among the units the operations of which are judged as capable of being restricted. Therefore, in the battery-operated reproduction terminal, reduction in battery power consumption is achieved by appropriate operation restriction according to the attributes of multimedia data, whereby reproduction of multimedia data can be carried out over long hours while maintaining high reproduction quality for important data.

According to the present invention (Claim 2), the data reproduction apparatus as defined in Claim 1 further includes: a relevant data acquisition unit for obtaining relevant data relating to the multimedia data from a terminal on a network; and the control unit performing the operation restriction on the basis of the attributes of the multimedia data indicated by the relevant data. Therefore, in the battery-operated portable terminal, reduction in battery power consumption is achieved by appropriate operation restriction according to the relevant data, whereby the user can utilize moving picture distribution services or the like for long hours according to the contents of multimedia data.

According to the present invention (Claim 3), the data reproduction apparatus as defined in Claim 2 further includes: a data storage unit for holding the received coded data; and the control unit controlling the data storage unit so as to hold only a portion of the coded data on the basis of the relevant data. Therefore, even when the operation of reproducing the coded data is restricted to suppress consumption of battery power during reception of the coded data, the coded data can be later reproduced without restricting the operation, in the state where the battery power is sufficient such as after battery recharge.

According to the present invention (Claim 4), in the data reproduction apparatus as defined in Claim 3, the control unit controls the data storage unit so as to store only either of coded video data and coded audio data which are included in the coded data. Therefore, even when only either of the coded video data and the coded audio data is reproduced to suppress consumption of battery power during reception of the coded data, the data which has not been reproduced during reception can be later reproduced in the state where the battery power is sufficient such as after battery recharge.

According to the present invention (Claim 5), the data reproduction apparatus as defined in Claim 4 further includes: a relevant data acquisition unit for obtaining the relevant data relating to the multimedia data from a terminal on a network; a preference data storage unit in which preference data indicating user's reference is stored; a judgement unit for judging the degree of importance of the received coded data on the basis of the relevant data and the preference data stored in the preference data storage unit; and the control unit performing the operation restriction on the basis of the degree of importance of the coded data, which is judged by the judgement unit. Therefore, in the battery-operated reproduction terminal, reduction in battery power consumption is achieved by appropriate operation restriction according to the importance of multimedia data, whereby the user can utilize moving picture distribution services or the like for long hours according to the importance of multimedia data.

According to the present invention (Claim 6), in the data reproduction apparatus as defined in Claim 1, the control unit performs restriction on the operation according to the amount of remaining battery power. Therefore, the data reproduction apparatus is prevented from being disabled due to a reduction in battery voltage which is caused by that reproduction of the received coded data is carried out in the state where the amount of remaining battery power is insufficient. Further, when the amount of remaining battery power is sufficient, operation restriction is eased to provide high-quality reproduced image and voice.

According to the present invention (Claim 7), in the data reproduction apparatus as defined in Claim 1, the output unit performs image display on the basis of the coded data; and the control unit restricts the operation of the output unit so as to reduce a luminance level at the image display. Therefore, image display can be carried out while suppressing consumption of battery power.

According to the present invention (Claim 8), in the data reproduction apparatus as defined in Claim 1, the control unit performs the operation restriction so as to decode or output only data corresponding to specific frames, among the coded video data included in the coded data. Therefore, by performing data reproduction of an image of less motion at intervals of several frames, image display can be favorably carried out at a normal luminance level while suppressing consumption of battery power.

According to the present invention (Claim 9), in the data reproduction apparatus as defined in Claim 1, the control unit performs the operation restriction so as to receive, decode, or output only either of coded video data and coded audio data which are included in the coded data. Therefore, either image display or voice output can be favorably carried out according to the contents of multimedia data while suppressing consumption of battery power.

According to the present invention (Claim 10), in the data reproduction apparatus as defined in Claim 1, the control unit performs the operation restriction so as to decode or output only data of a high priority among the coded data, on the basis of the attributes of the multimedia data. Therefore, reproduction of coded data of multimedia data can be carried out while suppressing consumption of battery power and, moreover, the reproduction quality of an important portion of the coded data can be kept high.

According to the present invention (Claim 11), in the data reproduction apparatus as defined in Claim 1, the coded data is hierarchically-coded data which has been obtained by hierarchically coding the multimedia data while separating the multimedia data into a base layer and an addition layer; and the control unit performs the operation restriction so as to receive, decode, or output only data corresponding to the base layer among the coded data. Therefore, reproduction of coded data of multimedia data can be carried out over the whole data while suppressing consumption of battery power.

According to the present invention (Claim 12), the data reproduction apparatus as defined in Claim 11 further includes a data storage unit for holding the received coded data; and the control unit controlling the data storage unit so as to hold only the coded data corresponding to the base layer, on the basis of the attributes of the multimedia data. Therefore, even when decoding or output of the coded data is not carried out to suppress consumption of battery power at reception of the coded data, reproduction of the coded data can be carried out in the state where the battery power is sufficient such as after battery recharge, while maintaining appropriate reproduction quality.

According to the present invention (Claim 13), there is provided a data reproduction method for receiving coded data of multimedia data and reproducing the coded data by a power supplied from a battery, and this method comprises: a reception step of receiving the coded data; a decoding step of decoding the received coded data to generate decoded data; an output step of outputting image or voice on the basis of the decoded data; and a control step of controlling at least one operation among the reception, decoding, and outputting, according to attributes of the multimedia data, so as to suppress consumption of the battery power, said method being characterized by, in said control step, judging, according to data structure of the coded data, which operation among the receiving, decoding, and outputting can be restricted, and restricting an operation which is earlier performed among the operations judged as capable of being restricted. Therefore, in a battery-operated reproduction terminal, reduction in battery power consumption is achieved by appropriate operation restriction according to the attributes of multimedia data, whereby reproduction of multimedia data can be carried out over long hours while maintaining high reproduction quality for important data.

According to the present invention (Claim 14), the data reproduction method as defined in Claim 13 further includes: a relevant data acquisition step of obtaining the relevant data relating to the multimedia data from a terminal on a network; a judgement step of judging the degree of importance of the received coded data on the basis of the relevant data and preference data that is stored in a preference data storage unit; and the control step restricting at least one operation among the reception, decoding, and reproduction on the basis of the degree of importance of the coded data, which is judged by the judgement step. Therefore, reduction in battery power consumption is achieved by appropriate operation restriction according to the importance of multimedia data, whereby the user can utilize moving picture distribution services or the like for long hours according to the contents of multimedia data or the preferences of the user.

According to the present invention (Claim 15), there is provided a program for making a computer execute a process of receiving coded data of multimedia data and reproducing the coded data by a power supplied from a battery, and the program includes: a reception step of receiving the coded data; a decoding step of decoding the received coded data to generate decoded data; an output step of outputting image or voice on the basis of the decoded data; and a control step of controlling at least one operation among the reception, decoding, and reproduction, according to attributes of the multimedia data, so as to suppress consumption of the battery power, said method being characterized by, in said control step, judging, according to data structure of the coded data, which operation among the receiving, decoding, and outputting can be restricted, and restricting an operation which is earlier performed among the operations judged as capable of being restricted. Therefore, it is possible to realize, by software, a data reproduction process in which reduction in battery power consumption is achieved by appropriate operation restriction according to the attributes of multimedia data, whereby reproduction of multimedia data can be carried out over long hours while maintaining high reproduction quality for important data.

BRIEF DESCRIPTION OF THE DRAWINGS

Figure 1 is a block diagram for explaining a data reproduction apparatus 100a according to a first embodiment of the present invention.

Figures 2(a) and 2(b) are diagrams for explaining the operation of the data reproduction apparatus 100a (reproduction terminal) according to the first embodiment, wherein figure 2(a) shows the flow of data between a server SA and the reproduction terminal 100a, and figure 2(b) shows the flow of process for restricting the operation of the reproduction terminal.

Figure 3 is a block diagram for explaining a data reproduction apparatus 100b according to a second embodiment of the present invention.

Figure 4 is a flowchart for explaining the process of restricting the reproduction operation of the data reproduction apparatus 100b according to the second embodiment.

Figures 5(a) and 5(b) are diagrams illustrating messages which are displayed when the amount of remaining battery power is small in the data reproduction apparatus 100b according to the second embodiment, wherein figure 5(a) shows a guide message (I) and figure 5(b) shows a selection message (II).

Figure 6 is a block diagram for explaining a data reproduction apparatus 100c according to a third embodiment of the present invention.

Figure 7 is a diagram illustrating the data reproduction apparatus 100c according to the third embodiment, and a server SA which supplies relative data and multimedia data to the apparatus.

Figure 8 is a diagram for explaining the operation of the data reproduction apparatus 100c (reproduction terminal) according to the third embodiment, and illustrates the flow of data between the server SA and the reproduction terminal 100c.

Figure 9 is a diagram for explaining an example of a description Drec of relative data to be supplied to the data reproduction apparatus 100c according to the third embodiment.

Figure 10 is a block diagram for explaining a data reproduction apparatus 100d according to a fourth embodiment of the present invention.

Figure 11 is a diagram for explaining an example of a description Dred of relative data to be supplied to the data reproduction apparatus 100d according to the fourth embodiment.

Figure 12 is a diagram for explaining an example of a description Dfvd of preference data to be used in the data reproduction apparatus 100d according to the fourth embodiment.

Figure 13 is a diagram for explaining the operation of the data reproduction apparatus 100d (reproduction terminal) according to the fourth embodiment, and illustrates the flow of a process for restricting the operation in the reproduction terminal.

Figure 14 is a diagram for explaining a process of judging the importance of multimedia data, in the data reproduction apparatus 100d according to the fourth embodiment.

Figure 15 is a diagram illustrating an example of a pattern of changing the process for restricting the operation according to the lapse of time from the start of multimedia data reproduction.

Figure 16 is a block diagram for explaining a data reproduction apparatus 100e according to a fifth embodiment of the present invention.

Figure 17 is a diagram illustrating message exchange for obtaining only either of video data and audio data, as multimedia data, in the data reproduction apparatus 100c according to the third embodiment.

Figures 18(a) and 18(b) are diagrams illustrating a data storage medium which contains a program for constituting the data reproduction apparatus according to any of the embodiments mentioned above by a computer system, and figure 18(c) is a diagram for explaining the computer system.

Figure 19 is a block diagram for explaining a conventional data reproduction apparatus.

BEST MODE TO EXECUTE THE INVENTION

[Embodiment 1]

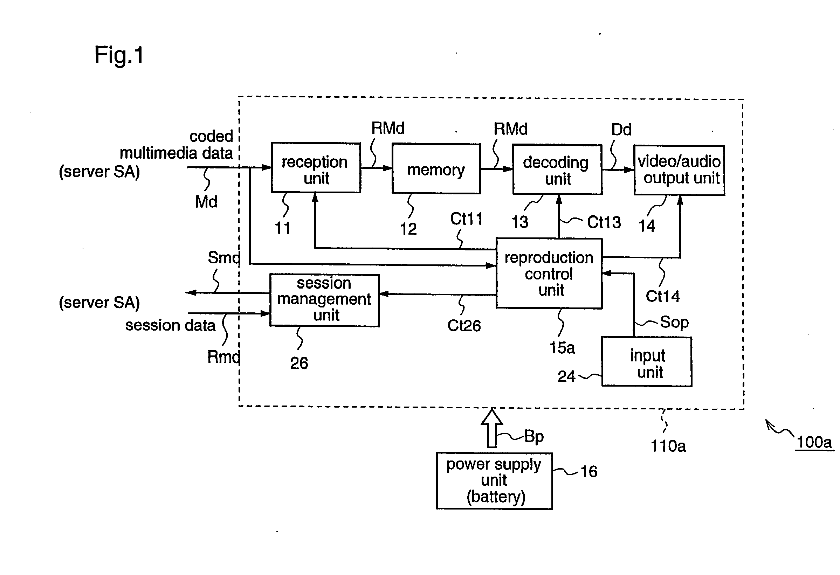

Figure 1 is a block diagram for explaining a data reproduction apparatus according to a first embodiment of the present invention.

A data reproduction apparatus 100a according to the first embodiment performs a data reproduction process for receiving a multimedia data stream Md which is obtained by coding multimedia data such as video data, audio data, and text data (hereinafter also referred to as "coded multimedia data" or "coded data"), and reproducing the multimedia data stream Md, with a power supplied from a battery. To be specific, the data reproduction apparatus 100a is an information terminal such as a PDA (Personal Digital Assistance), or a handy phone that can receive a multimedia data stream. It is premised that the coded multimedia data includes various kinds of additional information for data transmission, such as header information, in addition to the coded contents data such as video data, audio data, and text data. Further, the coded multimedia data is composed of, for example, packets containing the coded data of contents and packets containing the additional information. Moreover, there are cases where the coded multimedia data is multiplexed coded data in which coded data such as coded video data, coded audio data, and coded text data are multiplexed. However, the following description will be mainly given of cases where the coded multimedia data is not multiplexed coded data.

That is, the data reproduction apparatus 100a according to the first embodiment is a portable terminal having a data reproduction unit 110a, and a power supply unit 16. The data reproduction unit 110a receives the coded multimedia data Md, and reproduces the data. The power supply unit 16 is provided with a battery as a power source, and supplies a battery power Bp to the data reproduction unit 110a. The power supply unit 16 is identical to the power supply unit 105 of the conventional data reproduction apparatus 100. The battery mounted on the power supply unit 16 may be either a battery that is not rechargeable such as an ordinary dry battery, or a rechargeable battery.

The data reproduction unit 110a of the data reproduction apparatus 100a is provided with a reception unit 11 which performs an operation of receiving the coded data Md from a server SA on the basis of a control signal Ct11; a memory 12 which temporarily holds the output (received coded data) RMd from the reception unit 11; a decoding unit 13 which performs a decoding process of decoding the coded data RMd read from the memory 12 to output decoded data (multimedia data) Dd, on the basis of a control signal Ct13; a video/audio output unit 14 which performs a reproduction process of executing image output such as image display or voice output according to the decoded data (multimedia data) Ds from the decoding unit 13, on the basis of a control signal Ct14; and a session management unit 26 which performs exchange of control messages Sm and Rm such as a transmission request for contents (coded multimedia data), with the server SA, on the basis of a control signal Ct26. When the reception unit 11 receives, as the coded multimedia data, multiplexed coded data in which coded audio data, coded video data, and coded text data are multiplexed, the reception unit 11 separates the coded audio data, the coded video data, and the coded text data from the multiplexed coded data, and outputs the separated data.

Further, the data reproduction unit 110a is provided with an input unit 24 which outputs an operation signal Sop by user operation; and a reproduction control unit 15a which restricts the operation of at least one of the reception unit 11, the decoding unit 13, and the video/audio output unit 14 so as to suppress consumption of the power supplied from the battery power supply 16, on the basis of the operation signal Sop from the input unit 24 and the data structure of the inputted coded multimedia data Md.

The reception unit 11 may be either a receiver that receives the coded multimedia data through a radio communication path, or a receiver that receives the coded multimedia data through a cable communication path. Further, the video/audio output unit 14 is identical to the video/audio output unit 104 of the conventional data reproduction apparatus 100, and it is provided with, for example, an audio output unit (not shown) including a speaker or the like, and a display unit (not shown) such as a liquid crystal monitor that performs image display.

Furthermore, in the reproduction control unit 15a, either a restriction mode performing operation restriction or a non-restriction mode not performing operation restriction is set according to the operation signal Sop from the input unit 24. When the restriction mode is set, the reproduction control unit 15a controls the respective units 11, 13, and 14 so that various kinds of operation restrictions which are specified by the operation signal Sop from the input unit 24 are performed on these units, according to the data structure of the coded data Md.

For example, there are cases where the operation of the reception unit 11 cannot be restricted, depending on the structure of the inputted coded data.

To be specific, when RTP (Real Time Streaming Protocol) is used, since data included in a received packet can be distinguished between video data and audio data by identifying information or the like included in the received packet, the reception operation can be restricted. On the other hand, when multiplexed data (file data) in which video data and audio data are multiplexed is downloaded by using HTTP (Hyper Text Transfer Protocol), since the reception unit 11 cannot separate the video data and the audio data, the reception operation cannot be restricted.

In this case, the reproduction control unit 15a performs the operation restriction specified by the operation signal Sop from the input unit 24, as operation restriction on one or both of the decoding unit 13 and the video/audio output unit 14.

However, even when the data structure of the inputted coded data Md allows operation restriction on all of the reception unit 11, the decoding unit 13, and the video/audio output unit 14, the reproduction control unit 15a may perform operation restriction on any one or two of these units 11, 13, and 14, according to the operation signal Sop.

Whether operation restriction on the reception unit 11 is possible or not is judged from an identifier of a packet in the inputted coded data Md. When the coded multimedia data is multiplexed data (file data), the possibility of operation restriction on the reception unit 11 is judged from header information or the like that is included in the file data, when receiving the multiplexed data. Further, when the file data is downloaded by using HTTP protocol, the possibility of operation restriction on the reception unit 11 may be judged by using header information of HTTP.

Hereinafter, the concrete processes of operation restriction that can be specified by the user operation at the input unit 24 will be described specifically.

As for concrete operation restriction processes, there are four processes as follows: a process of restricting the luminance level at image display (first operation restriction process); a process of restricting frames to be reproduced (second operation restriction process); a process of reproducing only either of audio data and video data (third operation restriction process); and a process of reproducing only data of a base layer in multimedia data which has been subjected to hierarchical coding (fourth operation restriction process). Hereinafter, the first to fourth operation restriction processes will be briefly described. The hierarchical coding process for the multimedia data is a process of hierarchically coding the multimedia data while separating the multimedia data into data corresponding to a base layer and data corresponding to an additional layer.

(1) First operation restriction process (restriction of luminance level)

In the first operation restriction process, the luminance level at image display by the video/audio output unit 14 is reduced to be lower than the luminance level at non-restriction. To be specific, in this process, the reproduction control unit 15a controls the video/audio output unit 14 so that the luminance level at image display becomes a restricted luminance level, according to the control signal Ct14, whereby consumption of the battery power supplied from the power supply unit 16 is suppressed.

The restricted luminance level is not particularly limited. For example, it may be a luminance level in the restriction mode, which is previously set as a default value of the data reproduction apparatus, or it may be a luminance level which is input from the input unit 24 by user operation. Further, as an example of a concrete luminance level in the restriction mode, there is a luminance level half the luminance level in the non-restriction mode, or 0 level with which no image display is carried out.

(2) Second operation restriction process (restriction of frames)

In the second operation restriction process, decoding of the coded data in the decoding unit 13 or reproduction of the decoded data in the video/audio output unit 14 is performed on only predetermined frames. To be specific, when this second operation restriction process is performed, the reproduction control unit 15a controls the decoding unit 13 so as to decode only predetermined frames, or controls the video/audio output unit 14 so as to reproduce only predetermined frames. The unit to be controlled by the reproduction control unit 15a, i.e., either the decoding unit 13 or the video/audio output unit 14, is determined according to user setting. However, it may be uniquely set at the terminal.

Furthermore, various cases can be considered as to which frames should be selected as frames to be reproduced in the restriction mode. For example, moving picture data corresponding to MPEG includes data corresponding to I frames, B frames, and P frames. In the restriction mode, when coded data corresponding to I frames are decoded and reproduced, consumption of the power from the battery can be suppressed although the display image is a little rough. The process of restricting frames to be reproduced is not limited to the above-described process of selecting the frames from among the I, P, and B frames. Any process may be employed so long as it can restrict frames to be reproduced to some of plural frames constituting a moving picture.

(3) Third operation restriction process (output either audio or video)

In the third operation restriction process, data reception in the reception unit 11, data decoding in the decoding unit 13, or data output in the video/audio output unit 14 is restricted for only either of audio data and video data. To be specific, when this third operation restricting process is carried out, the reproduction control unit 15a restricts the operation of one of the reception unit 11, the decoding unit 13, and the video/audio output unit 14 so that only either of coded video data and coded audio data included in the coded multimedia data is reproduced. By restricting the data to be reproduced to either the audio data or the video data, consumption of the power from the battery can be suppressed as compared with the case where both of the video data and the audio data are reproduced. (4) Fourth operation restriction process (restriction when multimedia data is hierarchically coded)

There is a case where coded multimedia data is obtained by hierarchical coding of multimedia data. In this case, the fourth operation restriction process can be used.

For example, when multimedia data expresses a moving picture, the multimedia data is composed of plural frames. As an example of hierarchical coding for such multimedia data, there is a coding process in which data of frames selected from among the plural frames constituting the moving picture are coded as data corresponding to a base layer, and data of remaining frames other than the selected frames are coded as data corresponding to an additional layer to the base layer. For example, frames corresponding to the base layer are selected from among the frames constituting the moving picture at intervals of nine frames.

Further, when multimedia data expresses a composite image in which a foreground image is superimposed on a background image, for example, in hierarchical coding for such multimedia data, data corresponding to the background image is coded as data corresponding to a base layer, and data corresponding to the foreground image is coded as data corresponding to an additional layer to the base layer. To be specific, the background image is an image of scenery, and the foreground image is an image of a person or the like that moves forward the background image.

In the fourth operation restriction process, the reproduction control unit 15a restricts the operation of one of the reception unit 11, the decoding unit 13, and the video/audio output unit 14 so that only the coded data corresponding to the base layer included in the coded multimedia data is reproduced. When such operation restriction is carried out, consumption of the power from the buttery can be suppressed although the quality of the reproduced image or the like is degraded.

Furthermore, some of the first to fourth operation restriction processes may be combined.

For example, the operation of the data reproduction apparatus in the restriction mode may be a combination of the first operation restriction process and the second operation restriction process, that is, only data of I frames are coded, and image display of the I frames is carried out at a luminance level half the normal luminance level.

Further, the operation of the data reproduction apparatus in the restriction mode may be a combination of the second operation restriction process and the third operation restriction process, that is, only data of I frames in video data is decoded and reproduced, and audio data is not reproduced.

Furthermore, the operation of the data reproduction apparatus in the restriction mode may be a combination of the first operation restriction process and the fourth operation restriction process, that is, only data corresponding to a background image of a composite image is decoded, and display of the background image is performed at a luminance level half the normal luminance level.

Furthermore, the operation of the data reproduction apparatus in the restriction mode may be a combination of the first operation restriction process, the second operation restriction process, and the fourth operation restriction process, that is, only data corresponding to I frames of a background image of a composite image is decoded, and display of the background image is performed at a luminance level half the normal luminance level.

Hereinafter, the operation of the data reproduction apparatus 100a according to the first embodiment will be described.

In the data reproduction apparatus 100a, the respective units 11~14, 15a, 24, and 26 constituting the data reproduction unit 110a are operated with a battery power Bp supplied from the power supply unit 16.

Further, in the data reproduction apparatus 100a, either the restriction mode or the non-restriction mode is selected by the user as the operation mode of the apparatus.

When the restriction mode is selected, at least one operation restriction process is selected by the user from among the above-described four operation restriction processes.

To be specific, when the user operates the input unit 24 to set the operation mode and the specific operation restriction process, an operation signal Sop according to the user operation is output from the input unit 24 to the reproduction control unit 15a, and the reproduction control unit 15a determines the operation mode of the data reproduction apparatus 100a. That is, the reproduction control unit 15a selects either the restriction mode or the non-restriction mode as the operation mode of the data reproduction apparatus 100a, according to the operation signal Sop. Further, when the operation mode of the data reproduction apparatus 100a is set at the non-restriction mode, the reproduction control unit 15a selects at least one of the about-described four operation restriction processes as the concrete operation restriction process, according to the operation signal Sop.

When the user operates the input unit 24 to obtain coded data of a predetermined contents (multimedia data), an operation signal Sop corresponding to this user operation is output from the input unit 24 to the reproduction control unit 15a. Then, the reproduction control unit 15a controls the session management unit 26 so as to obtain the coded multimedia data, by a control signal Ct26.

To be specific, the session management unit 26 transmits a contents request message (GET http: //www.news.net/sport.mp4) Smd to the server SA, on the basis of the control signal Ct26 (time T = ta1). On receipt of this request message Smd, the server SA transmits a response message (HTTP/1.1 200 OK) Rmd to the request message Smd, to the reproduction terminal (data reproduction apparatus) 100a (time T = ta2), and thereafter, transmits coded multimedia data Md to the reproduction terminal (data reproduction apparatus) 100a (time T = ta3) .

On receipt of the coded multimedia data Md transmitted from the server SA, the data reproduction apparatus 100a reproduces the coded multimedia data Md according to the operation mode set by the user.

Hereinafter, the data reproduction operation of the data reproduction apparatus 100a will be described in detail.

Initially, a description will be given of the case where the operation mode of the data reproduction apparatus 100a is the non-restriction mode. In this case, the same operation as described for the conventional data reproduction apparatus 100 is carried out.

That is, when the coded multimedia data Md is transmitted from the server St to the data reproduction apparatus 100a, the data reproduction unit 110a performs reproduction of the coded multimedia data Md.

To be specific, the reception unit 11 receives the coded multimedia data (hereinafter also referred to as "coded data") Md from the server SA, and the received coded data RMd is stored in the memory 12. The decoding unit 13 decodes the coded data RMd read from the memory 102 to output decoded data Dd. Then, the video/audio output unit 14 performs voice output or image display, on the basis of the decoded data, i.e., the decoded multimedia data Dd.

Next, a description will be given of the case where the operation mode of the data reproduction apparatus 100a is the restriction mode.

In this case, when the coded multimedia data Md is transmitted from the server SA to the data reproduction apparatus 100a, the data reproduction unit 110a performs reproduction of the coded multimedia data Md, while performing operation restrictions on the reception unit 11, the decoding unit 13, and the video/audio output unit 14, according to the data structure of the coded multimedia data Md, and the operation restriction process specified by the user.

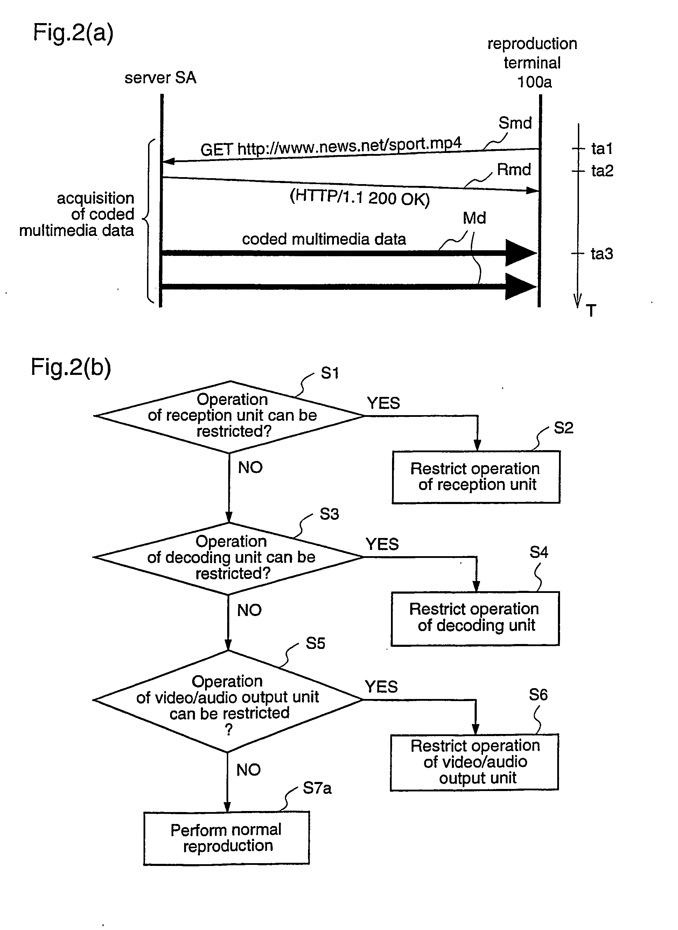

Figure 2(b) shows the flow of the operation restriction processes of the above-mentioned respective parts, which are to be performed by the reproduction control unit 15a of the data reproduction unit 110a.

That is, the reproduction control unit 15a judges whether operation restriction on the reception unit 11 is possible or not, on the basis of the data structure of the inputted coded multimedia data Md, and the operation restriction process which is set by the user (step S1).

To be specific, in step S1, the reproduction control unit 15a judges whether or not the data structure of the inputted coded multimedia data Md can be discriminated between audio data and video data in the reception unit 11, and whether or not the coded multimedia data Md has been hierarchically coded and can be discriminated between data of a base layer and data of an additional layer. Furthermore, in step S1, the reproduction control unit 15a judges whether or not the operation restriction process specified by the user can be carried out in the reception unit 11.

For example, the third operation restriction process (i.e., the process of receiving only either of audio data and video data), and the fourth operation restriction process (i.e., the process of receiving only data of a base layer included in hierarchically coded multimedia data) can be performed in the reception unit 11. On the other hand, the first operation restriction process (i.e., restriction on luminance level) and the second operation restriction process (restriction on frames to be reproduced) cannot be performed in the reception unit 11.

Accordingly, the reproduction control unit 15a judges that the operation of the reception unit 11 can be restricted, only when the data structure of the inputted coded multimedia data Md can be discriminated between audio data and video data in the reception unit 11, and the third operation restriction process is specified by the user, or when the coded multimedia data Md has been hierarchically coded and can be discriminated between data of a base layer and data of an additional data, and the fourth operation restriction process is specified by the user.

Then, the reception unit 11 performs the third operation restriction process or the fourth operation restriction process, on the basis of the control signal Ct11 from the reproduction control unit 15a (step S2).

On the other hand, when the reproduction control unit 15a judges that the operation of the reception unit 11 cannot be restricted, the reproduction control unit 15a judges whether the operation of the decoding unit 13 can be restricted or not, on the basis of the contents of user setting (step S3).

For example, when the first operation restriction process of restricting the luminance level at image display is specified as the concrete operation restriction process in the restriction mode, the reproduction control unit 15a judges that the operation of the decoding unit 13 can be restricted.

On the other hand, when the second operation restriction process of restricting frames to be reproduced or the third operation restriction process of reproducing only either of audio and video is specified as the concrete operation restriction process in the restriction mode, the reproduction control unit 15a judges that the operation of the decoding unit 13 can be restricted.

Furthermore, when the fourth operation restriction process of reproducing only data of a base layer included in hierarchically coded multimedia data is specified as the concrete operation restriction process in the restriction mode, the reproduction control unit 15a judges whether the operation of the decoding unit 13 can be restricted or not, according to whether the inputted coded multimedia data has been hierarchically coded or not. That is, when the inputted coded multimedia data has been hierarchically coded, the reproduction control unit 15a judges that the operation of the decoding unit 13 can be restricted. On the other hand, when the inputted coded multimedia data has not been hierarchically coded, the reproduction control unit 15a judges that the operation of the decoding unit 13 cannot be restricted.

When the reproduction control unit 15a judges that the operation of the decoding unit 13 can be restricted, the decoding unit 13 performs at least one operation restriction process among the second to fourth operation restriction processes, on the basis of the control signal Ct13 from the reproduction control unit 15a (step S4).

On the other hand, when the reproduction control unit 15a judges that the operation of the decoding unit 13 cannot be restricted, the reproduction control unit 15a judges whether the operation of the video/audio output unit 14 can be restricted or not, on the basis of the contents of user setting (step S5).

For example, when the first operation restriction process of restricting the luminance level at image display, or the second operation restriction process of restricting frames to be reproduced, or the third operation restriction process of reproducing only either of audio and video is specified as the concrete operation restriction process in the restriction mode, the reproduction control unit 15a judges that the operation of the video/audio output unit 14 can be restricted.

On the other hand, when the fourth operation restriction process of reproducing only data corresponding to a base layer included in hierarchically coded multimedia data is designated as the concrete operation restriction process, the reproduction control unit 15a judges whether the operation of the video/audio output unit 14 can be restricted or not, according to whether the inputted coded multimedia data has been hierarchically coded or not. That is, when the inputted coded multimedia data has been hierarchically coded, the reproduction control unit 15a judges that the operation of the video/audio output unit 14 can be restricted. On the other hand, when the inputted coded multimedia data has not been hierarchically coded, the reproduction control unit 15a judges that the operation of the video/audio output unit 14 cannot be restricted.

When the reproduction control unit 15a judges that the concrete operation restriction process specified by the user cannot be performed by any of the reception unit 11, the decoding unit 13, and the video/audio output unit 14, the reproduction control unit 15a controls these units so as to perform the normal operation, i.e., the operation in the non-restriction mode.

As described above, the data reproduction apparatus 100a according to the first embodiment is provided with the reception unit 11 for receiving the coded multimedia data Md, the decoding unit 13 for decoding the received coded data, and the video/audio output unit 14 for performing image display or voice output on the basis of the decoded multimedia data, and at least one operation among the operations of the reception unit 11, the decoding unit 13, and the video/audio output unit 14 is restricted according to the data structure of the inputted coded data and user setting, so as to suppress consumption of the battery power Bp in the respective units 11, 13, and 14. Therefore, in the battery-operated portable terminal, reduction in battery power consumption is achieved by appropriate operation restriction according to the data structure of multimedia data, whereby reproduction of multimedia data can be carried out over long hours.

[Embodiment 2]

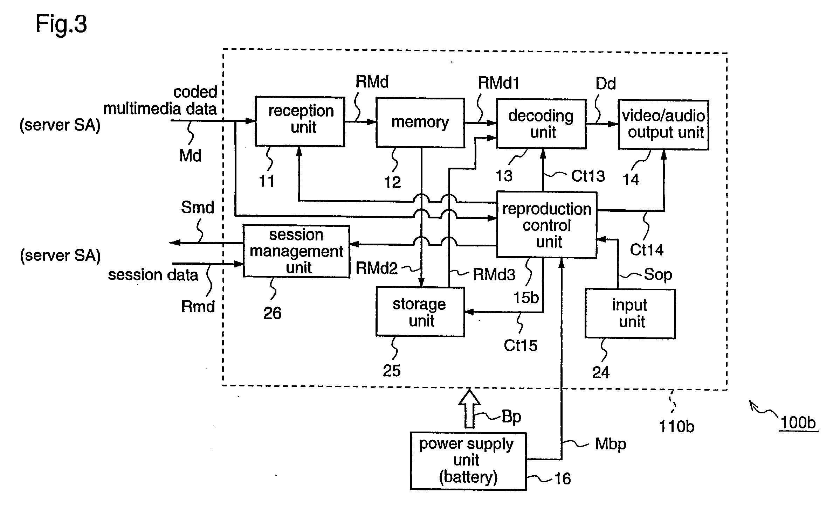

Figure 3 is a block diagram for explaining a data reproduction apparatus 100b according to a second embodiment of the present invention.

The data reproduction apparatus 100b according to the second embodiment is provided with, instead of the data reproduction unit 110a of the data reproduction apparatus 100a according to the first embodiment, a data reproduction unit 110b which performs reproduction of multimedia data in either the restriction mode or the non-restriction mode like the data reproduction unit 110a, and stores received coded multimedia data RMd according to the amount of remaining battery power and user operation.

That is, the data reproduction unit 110b of the data reproduction apparatus 100b includes a reception unit 11 which receives coded data Md from a server SA; a memory 12 for temporarily holding the output data RMd from the reception unit 11; a decoding unit 13 for decoding the coded data RMd read from the memory 12; a video/audio output unit 14 for performing image display or voice output according to the decoded data Dd from the decoding unit 13; a session management unit 26 for performing exchange of control messages Sm and Rm to the server; and an input unit 24 for outputting an operation signal Sop according to user operation. The reception unit 11, the video/audio output unit 14, the session management unit 26, and the input unit 24 are identical to those already described for the first embodiment.

The data reproduction unit 110b further includes a storage unit 25 which holds the coded data RMd that has been temporarily stored in the memory 12, as data RMd2, according to a control signal Ct15 and outputs the held coded data RMd2, as coded data RMd3, to the decoding unit 13 according to the control signal Ct15; and a reproduction control unit 15b which restricts the operation of at least one of the reception unit 11, the decoding unit 13, and the video/audio output unit 14 on the basis of the operation signal Sop from the input unit 24, the data structure of the inputted multimedia data stream Md, and a battery monitor signal Mbp indicating the amount of remaining battery power, so as to suppress consumption of the power supplied from the battery power supply unit 16, and controls the operation of storing the coded data RMd2 from the memory 12 in the storage unit 25, on the basis of the battery monitor signal Mbp and the user operation signal Sop from the input unit 24.

Next, the operation of the data reproduction apparatus 100b according to the second embodiment will be described.

In the data reproduction apparatus 100b, data processing, other than the process of storing the coded data RMd2 stored in the memory 12 into the storage unit 25 and the process of outputting the coded data RMd3 from the storage unit 25 to the decoding unit 13, is carried out in the same manner as described for the first embodiment.

In the data reproduction apparatus 100b, either the restriction mode or the non-restriction mode is set by the user as the operation mode of the apparatus 100b. When the restriction mode is set, the user selects one operation restriction process to be carried out from among the four operation restriction processes described for the first embodiment.

When a contents request message Smd is sent to the server SA according to user operation, a response message Rmd to the request message Smd and coded multimedia data Md are successively transmitted from the server SA to the reproduction terminal (data reproduction apparatus) 100b.

On receipt of the coded multimedia data Md transmitted from the server SA, the data reproduction apparatus 100b reproduces the coded multimedia data Md according to the operation mode set by the user.

When the operation mode of the data reproduction apparatus 100b is the non-restriction mode, the data reproduction apparatus 100b performs the same operation as that of the conventional data reproduction apparatus 100.

When the operation mode of the data reproduction apparatus 100b is the restriction mode, the data reproduction unit 110b performs reproduction of the coded multimedia data Md, while performing the process of restricting the operations of the reception unit 11, the decoding unit 13, and the video/audio output unit 14 as in the data reproduction unit 110a of the first embodiment, and further, the process of storing the coded data RMd2 in the storage unit 25 on the basis of the battery monitor signal Mbp and user operation.

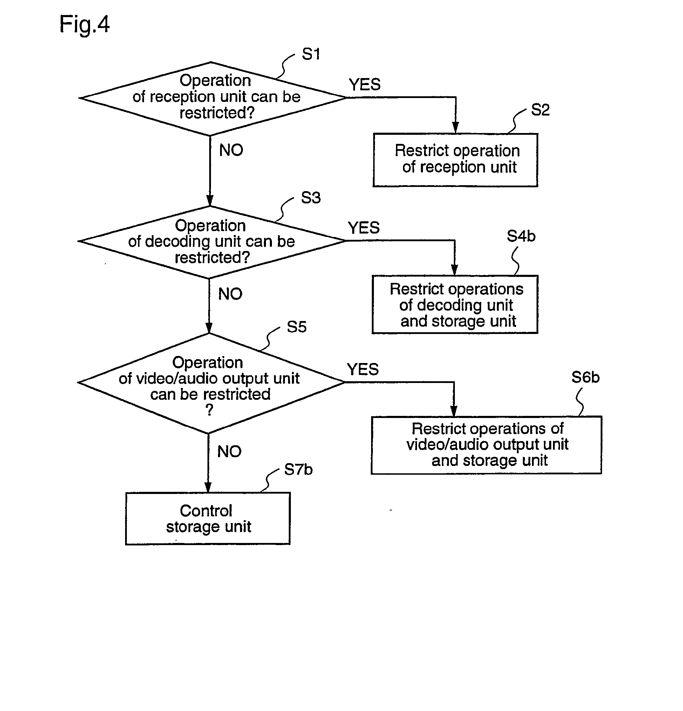

Figure 4 shows the flow of the operation restriction processes for the above-mentioned respective units, which processes are to be performed by the reproduction control unit 15b of the data reproduction unit 110b.

That is, the reproduction control unit 15b judges whether operation restriction on the reception unit 11 is possible or not, on the basis of the data structure of the inputted coded multimedia data Md, and the kind of the operation restriction process that is set by the user, like the reproduction control unit 15a of the data reproduction unit 110a according to the first embodiment (step S1). When the reproduction control unit 15b judges that the operation of the reception unit 11 can be restricted, the third operation restriction process or the fourth operation restriction process is carried out in the reception unit 11 on the basis of the control signal Ct11 from the reproduction control unit 15b (step S2).

On the other hand, when the reproduction control unit 15b judges that the operation of the reception unit 11 cannot be restricted, the reproduction control unit 15b judges whether the operation of the decoding unit 13 can be restricted or not, on the basis of the kind of the operation restriction process that is specified by the user (step S3).

The processes in steps S1~S3 which are performed by the data reproduction unit 110b of the second embodiment are identical to those already described for the first embodiment.

When the reproduction control unit 15b judges that the operation of the decoding unit 13 can be restricted, the reproduction control unit 15b performs at least one operation restriction process among the second to fourth operation restriction processes, as the operation restriction process for the decoding unit 13, according to the control signal Ct13, and further, it controls the operation of storing the data stored in the memory 12 into the storage unit 25, according to the battery monitor signal Mbp and user operation (step S4b).

The operation of the decoding unit 13 is carried out on the basis of the battery monitor signal Mbp indicating the amount of remaining battery power as well as the operation signal Sop from the input unit 24 and the data structure of the inputted multimedia data stream Md. Further, the operation of storing the data stored in the memory 12 into the storage unit 25 is carried out according to the battery monitor signal Mbp and user operation.

That is, when there is a sufficient amount of battery power remaining, data decoding in the decoding unit 13 is carried out, and the operation restriction process for the decoding unit 13 is carried out according to the operation mode, as described for the first embodiment.

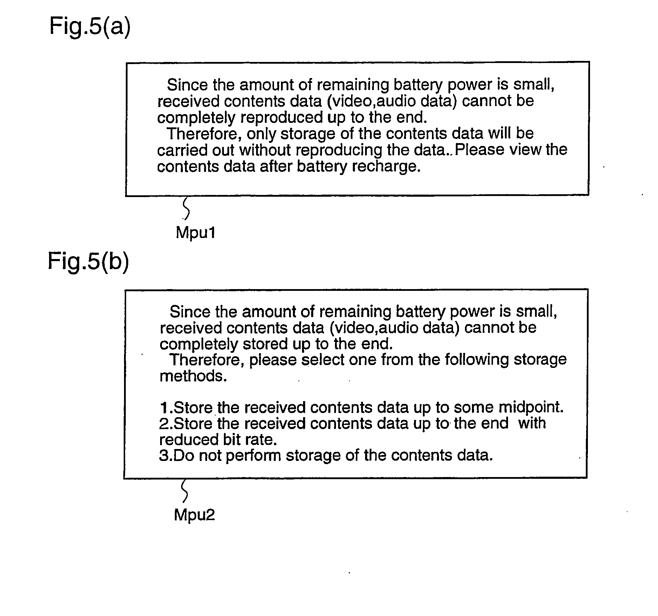

On the other hand, when the amount of remaining battery power is so small that all of the coded data of the received multimedia data (audio data and video data) cannot be reproduced up to the end, a pop-up message (I) Mpu1 shown in figure 5(a) is displayed on the display unit (not shown) of the data reproduction apparatus 100b. In this case, decoding of the coded data in the decoding unit 13 is not carried out, but storage of the coded data into the storage unit 25 is carried out.

Further, when the amount of remaining battery power is so small that all of the coded data of the received multimedia data (audio data and video data) cannot be stored up to the end, a pop-up message (II) Mpu2 shown in figure 5(b) is displayed on the display unit (not shown) of the data reproduction apparatus 100b.

In this case, the user selects a storage method from among three storage methods shown by the pop-up message (II) Mpu2, and storage of the multimedia data into the storage unit 25 is carried out by the selected storage method.

That is, when the user selects the first storage method (1. Store the received video and audio data up to some midpoint.), storage of the received video and audio data is carried out until the amount of remaining battery power reaches a threshold value of battery drive.

When the user selects the second storage method (2. Store the received video and audio data up to the end with the bit rate being lowered), re-coding of the received coded data is carried out at a bit rate according to the data size of the received coded data and the amount of remaining battery power at that point of time, and thereafter, storage of the re-coded data is carried out.

The bit rate for storing the multimedia data is calculated as follows.

Initially, a storable data size Sds is determined on the basis of the amount of remaining battery power.

Next, a bit rate Brt for storing the multimedia data is calculated from the determined storable data size Sds and a playback time length Tply of the received contents (multimedia data), using the following formula (1).

$$\texttt{Brt = Sds/Tplay} \qquad \texttt{...(1)}$$

Since the bit rate Brt is obtained for both of the video data and the audio data, when a stream corresponding to the audio data and a stream corresponding to the video data are separately stored, a bit rate for the audio data and a bit rate for the video data are determined on the basis of the bit rate Brt.

Further, the playback time length Tply can be obtained by referring to a header section of the coded data corresponding to the multimedia data, when the multimedia data is data of MP4 file format.

When the user selects the third storage method (3. Do not perform storage.), storage of the data into the storage unit 25 is not carried out.

The options of the storage methods are not restricted to the three methods mentioned above, and the options may include a method of storing only the video data (relating to sports) up to the end, or a method of storing only the audio data up to the end.

On the other hand, when the reproduction control unit 15b judges that the operation of the decoding unit 13 cannot be restricted, the reproduction control unit 15b judges whether the operation of the video/audio output unit 14 can be restricted or not, on the basis of the contents of user setting (the kind of the operation restriction process) (step S5).

When the reproduction control unit 15b judges that the operation of the video/audio output unit 14 can be restricted, the reproduction control unit 15b performs the operation restriction process specified by the user, as the operation restriction process for the video/audio output unit 14, according to the control signal Ct14, and further, it controls the operation of storing the data stored in the memory 12 into the storage unit 25, according to the battery monitor signal Mbp and the user operation (step S6b).

The operation of the video/audio output unit 14 is carried out on the basis of the battery monitor signal Mbp indicating the amount of remaining battery power as well as the operation signal Sop from the input unit 24 and the data structure of the inputted multimedia data stream Md. Further, the operation of storing the data stored in the memory 12 into the storage unit 25 is carried out in like manner as described for step S4b, according to the battery monitor signal Mbp and user operation.

That is, when there is a sufficient amount of battery power remaining, data processing in the video/audio output unit 14 is carried out, and the operation restriction process for the video/audio output unit 14 is carried out according to the operation mode, as described for the first embodiment.

However, when the amount of remaining battery power is so small that all of the coded data of the received coded multimedia data (coded audio data and coded video data) cannot be reproduced up to the end, a pop-up message (I) Mpu1 shown in figure 5(a) is displayed on the display unit (not shown) of the data reproduction apparatus 100b. In this case, image display or voice output in the video/audio output unit 14 is not carried out, and storage of the coded data into the storage unit 25 is carried out.

When the amount of remaining battery power is so small that all of the received coded multimedia data (coded audio data and coded video data) cannot be stored up to the end, a pop-up message (II) Mpu2 shown in figure 5(b) is displayed on the display unit (not shown) of the data reproduction apparatus 1 00b.

In this case, storage of the coded multimedia data is carried out by a storage method that is selected by the user from among the three storage methods indicated by the pop-up message (II) Mpu2.

When the reproduction control unit 15b judges that the operation of the video/audio output unit 14 cannot be restricted, i.e., when it judges that the concrete operation restriction process specified by the user cannot be carried out by any of the reception unit 11, the decoding unit 13, and the video/audio output unit 14, the reproduction control unit 15b controls the reception unit 11, the decoding unit 13, and the video/audio output unit 14 so as to perform the normal operation, i.e., the operation in the non-restriction mode.

Furthermore, in this case, the reproduction control unit 15b controls the operation of storing the data stored in the memory 12 into the storage unit 25, according to the battery monitor signal Mbp and the user operation (step S7b).

This operation restriction on the storage unit 25 in step S7b is carried out in like manner as described for step S4b.

The coded data RMd2 stored in the storage unit 25 is read as stored data RMd3 from the storage unit 25 by user operation after battery recharge. The read data is decoded in the decoding unit 13, and the decoded data is reproduced in the video/audio output unit 14.

As described above, the data reproduction apparatus 100b according to the second embodiment is provided with the reception unit 11 for receiving the coded multimedia data Md, the decoding unit 13 for decoding the received coded data RMd, the video/audio output unit 14 for performing image display or voice output on the basis of the decoded multimedia data, and the storage unit 25 in which the received coded multimedia data is stored according to the amount of remaining battery power and user operation, and the operation of at least one of the reception unit 11, the decoding unit 13, and the video/audio output unit 14 is restricted in the same manner as described for the first embodiment, and furthermore, the operation of storing the received data into the storage unit 25 is controlled according to the amount of remaining battery power and user operation. Therefore, power consumption in the battery-operated portable terminal is effectively reduced, whereby the user can utilize video distribution services or the like for long hours. Furthermore, the received data can be stored in the storage unit by the storage method desired by the user according to the amount of remaining battery power, and the stored data can be reproduced after battery recharge.

[Embodiment 3]

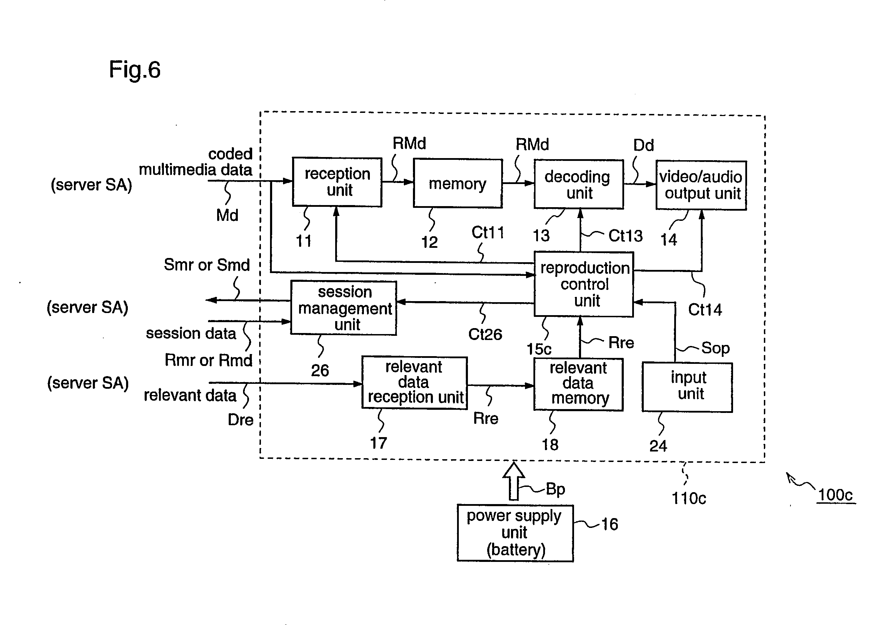

Figure 6 is a block diagram for explaining a data reproduction apparatus 100c according to a third embodiment of the present invention.

The data reproduction apparatus 100c according to the third embodiment is provided with a data reproduction unit 110c which restricts an operation for reproducing coded multimedia data, on the basis of relevant data relating to the multimedia data, instead of the data reproduction unit 110a of the data reproduction apparatus 100a according to the first embodiment.

The data reproduction unit 110c includes a reception unit 11, a memory 12, a decoding unit 13, a video/audio output unit 14, a session management unit 26, a reproduction control unit 15c, and an input unit 24, like the data reproduction unit 110a according to the first embodiment. The reception unit 11, the memory 12, the decoding unit 13, the video/audio output unit 14, the input unit 24, and the session management unit 26 are identical to those described for the first embodiment.

Further, the data reproduction unit 110c includes a relevant data reception unit 17 for receiving relevant data Dre indicating attributes of the multimedia data, which is transmitted from a server SA; and a relevant data memory 18 for temporarily holding the output RDre from the relevant data reception unit 17.

The reproduction control unit 15c performs exchange of messages Smd and Rmd for obtaining the relevant data Dre and the multimedia data Md, with the server SA, according to a control signal Sop supplied from the input unit 24, and further, it performs operation restriction on the reception unit 11, the decoding unit 13, and the video/audio output unit 14 according to the data structure of the coded multimedia data, on the basis of the relevant data Dre.

The operation restriction to be performed by the data reproduction apparatus 100c according to this third embodiment is restriction to be imposed on the operation of at least one of the reception unit 11, the decoding unit 13, and the video/audio output unit 14 so as to suppress consumption of battery power, as described for the first embodiment of the invention. To be specific, a process selected by the user from among the first to fourth operation restriction processes described for the first embodiment is carried out according to the data structure of the coded multimedia data.

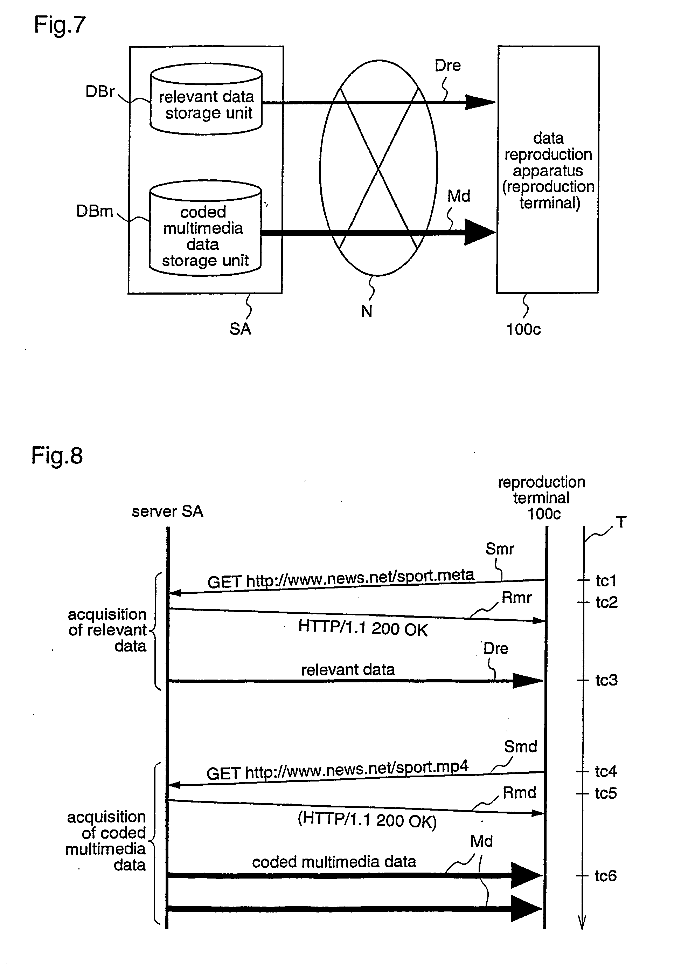

Figure 7 is a diagram illustrating the flow of data from the server SA to the data reproduction apparatus 100c according to the third embodiment.

The server SA has a coded multimedia data storage unit DBm in which the coded data of the multimedia data is stored, and a relevant data storage unit Dbr in which the relevant data Dre is stored. When a relevant data request message is transmitted from the data reproduction apparatus 100c as a reproduction terminal to the server SA, the relevant data Dre is read from the relevant data storage unit DBr of the server SA and transmitted to the data reproduction apparatus 100c through a network N. Further, when a coded multimedia data request message is transmitted from the data reproduction apparatu 100c to the server SA, the coded multimedia data Md is read from the coded multimedia data storage unit DBm of the server SA, and transmitted to the data reproduction apparatus 100c through the network N. In this third embodiment, HTTP/TCP/IP is used as a transmission protocol. However, any protocol may be used so long as it enables the data reproduction apparatus 100c to obtain data from the server SA.

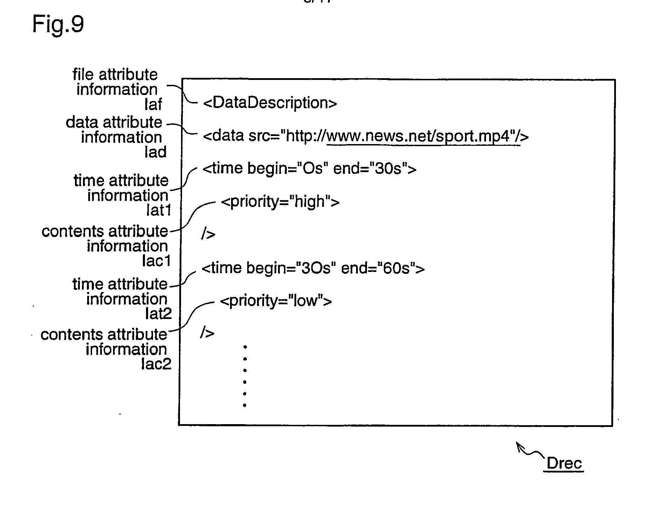

Figure 9 is a diagram for explaining an example of a description Drec of the relevant data Dre.

The relevant data Dre is represented by combinations of intrinsic character strings expressing attributes, and attribute values corresponding to the attributes.

For example, a character string Iaf in the first line in the description Drec of the relevant data Dre shown in figure 9 is information indicating a file attribute (file attribute information), which indicates that this description Drec is a description relating to the contents of the multimedia data Md. A character string Iad in the second line in the description Drec is information indicating a data attribute (data attribute information), which indicates that the relevant data Dre relates to coded multimedia data "sport.mp4" stored in a place "www.news.net/" on the network.

Further, changes of the relevant data Dre corresponding to the coded multimedia data on the time series can be deal with by using time attributes.

For example, a character string Iat1 in the third line in the description Drec shown in figure 9 is information indicating a time attribute (time attribute information). This time attribute information Iat1 indicates that information corresponding to a portion of the multimedia data during a playback time from 0 sec to 30 sec is described in a space sandwiched by a symbol string [<time] and a symbol string [>], using a character string [time]. Further, a character string Iac1 in the fourth line in the description Drec is information indicating a contents attribute (contents attribute information), which indicates that a value relating to the contents shown by a character string [priority] is at a high level [high] . In the description Drec shown in figure 9, the time attribute information Iat1 and the contents attribute information Iac1 indicate that the portion of the multimedia data during the playback time from 0 sec to 30 sec is of high importance.

Likewise, it is known that a portion of the multimedia data during a playback time from 30 sec to 60 sec is of low importance, from time attribute information Iat2 and contents attribute information Iac2 in the description Drec shown in figure 9.

When it is necessary to update the relevant data stored in the relevant data memory 18 with a change in the contents of the multimedia data, the relevant data reception unit 17 obtains new relevant data from the server SA, and the new relevant data overwrites the relevant data stored in the memory 18.

Next, the operation of the data reproduction apparatus 100c will be described.

Initially, the operation of the data reproduction apparatus 100c for obtaining the multimedia data and the relevant data will be described.

For example, when the data reproduction apparatus 100c tries to obtain the MP4 file format multimedia data "sport.mp4" including video data and audio data, and the corresponding relevant data "sport.meta" by using HTTP, the data reproduction apparatus 100c initially transmits a command (request message) for obtaining the relevant data "sport.meta" to the server SA, and then receives the relevant data "sport.meta" which is transmitted from the server SA in response to the request message. Although the data to be obtained by the data reproduction apparatus is the coded data of the multimedia data "sport.meta", it is also referred to simply as multimedia data "sports.meta" for convenience sake.

Next, the data reproduction apparatus 100c transmits a command (request message) for obtaining the multimedia data "sport.mp4" to the server SA, and receives the multimedia data "sport.mp4" which is transmitted from the server SA in response to the request message.

Although the relevant data and the multimedia data are separately transmitted from the server SA to the data reproduction apparatus 100c, the relevant data and the multimedia data may be combined as data corresponding to a single file to be transmitted.

Figure 8 is a diagram for explaining message exchange and data transmission/reception to be performed between the data reproduction apparatus 100c and the server SA according to the lapse of time. Hereinafter, the operation for obtaining the relevant data and the multimedia data will be described in more detail.

Initially, the user operates the input unit 24 to obtain a predetermined contents (multimedia data) and the corresponding relevant data Dre, and an operation signal Sop corresponding to the user operation is output from the input unit 24 to the reproduction control unit 15c. Then, the reproduction control unit 15c instructs, with a control signal Ct26, the session management unit 26 to successively perform acquisition of the relevant data and acquisition of the multimedia data.

Then, the session management unit 26 transmits a relevant data request message (GET http://www.news.net/sport.meta) Smr to the server SA (time T = tc1). On receipt of this request message Smr, the server SA transmits a response message (HTTP/1.1 200 OK) Rmr to the request message Smr to the reproduction terminal (data reproduction apparatus) 100c (time T = tc2), and thereafter, transmits the relevant data Dre to the reproduction terminal (data reproduction apparatus) 100c (time T = tc3). The transmitted relevant data Dre is received by the relevant data reception unit 17 in the reproduction terminal 100c.

Subsequently, the session management unit 26 transmits a contents request message (GET http://www.news.net/sport.mp4) Smd to the server SA (time T = tc4). On receipt of this request message Smd, the server SA transmits a response message (HTTP/1.1 200 OK) Rmr to the request message Smd to the reproduction terminal (data reproduction apparatus) 100c (time T = tc5), and thereafter, transmits the coded data of the multimedia data (coded multimedia data) Md to the reproduction terminal (data reproduction apparatus) 100c (time T = tc6).

Next, the operation of the data reproduction apparatus 100c for reproducing the coded multimedia data on the basis of the relevant data will be described.

Hereinafter, the operation in the case where the restriction mode is set to the data reproduction apparatus 100c will be described.

The relevant data reception unit 17 receives the relevant data Dre transmitted from the server SA, and the received relevant data RDre is stored in the relevant data memory 18.

The reproduction control unit 15c restricts the operation of at least one of the reception unit 11, the decoding unit 13, and the video/audio output unit 14, on the basis of the relevant data Rre stored in the relevant data memory 18.

As for a concrete process of operation restriction at this time, a process specified by user setting or by default setting of the data reproduction apparatus 100c is selected from among the four operation restriction processes described for the first embodiment. Whether operation restriction on the reception unit 11 is possible or not depends on the data structure of the inputted coded multimedia stream. Therefore, in this third embodiment, when the reproduction process is restricted by restricting the operation of the reception unit 11 as in the case where the process of reproducing only either of audio data and video data (third operation restriction process) is carried out, it is previously judged whether operation restriction on the reception unit 11 is possible or not, on the basis of the data structure of the coded multimedia data.

Hereinafter, a description will be given of operation restriction in the case where the first operation restriction process (process of restricting the luminance level at image display) is set. In this case, as already described for the first embodiment, since only operation restriction on the video/audio output unit 14 is possible, the operation of the video/audio output unit 14 is restricted on the basis of the relevant data Dre.

For example, when the relevant data Dre is that shown in figure 9, since the portion of the multimedia data during the playback time from 0 sec to 30 sec is of high importance, the reproduction control unit 15c controls the video/audio output unit 14 so as to perform image display at a normal luminance level until 30 seconds passes from the start of the playback time. Further, since the portion of the multimedia data during the playback time from 30 sec to 60 sec is of low importance, the reproduction control unit 15c controls the video/audio output unit 14 so as to perform image display at a luminance level lower than the normal luminance level until 60 seconds passes from when 30 seconds has passed from the start of playback.

When the operation mode of the data reproduction apparatus 100c is set at the non-restriction mode by the user, the above-described operation restriction based on the relevant data is not carried out, and the data reproduction apparatus 100c operates in the same way as the data reproduction apparatus 100a of the first embodiment in the non-restriction mode.

As described above, the data reproduction apparatus 100c according to the third embodiment is provided with the relevant data reception unit 17 for receiving the relevant data Dre relating to the multimedia data, in addition to the reception unit 11 for receiving the coded multimedia data Md, the decoding unit 13 for decoding the received coded data RMd, and the video/audio output unit 14 for performing image display or voice output on the basis of the decoded multimedia data Dd. The relevant data reception unit 17 obtains, as the relevant data Dre, data indicating the importance of the multimedia data, that is set for each of plural portions into which the multimedia data is divided according to the playback time. On the basis of the relevant data Dre, an important portion of the coded multimedia data is reproduced so as to maintain a high reproduction quality while a portion of the coded multimedia data that is not important very much is reproduced so as to reduce the reproduction quality to some degree by restricting the operation of the video/audio output unit 14. Therefore, reproduction of the multimedia data can be carried out while reducing power consumption, and increasing the reproduction quality of an important portion of the multimedia data.

That is, in addition to the effect that power consumption of the battery-operated portable terminal is effectively suppressed to enable the user to utilize video distribution services or the like for long hours, the multimedia data reproduction operation of the reproduction terminal can be restricted according to the contents of the multimedia data.

Accordingly, reproduction of the multimedia data can be carried out with suppressing power consumption, without degrading the reproduction quality of a portion of video data or audio data included in the multimedia data, which portion is important for the user.

While in this third embodiment the first operation restriction process (process of restricting the luminance level at image display) is carried out as the specific operation restriction process, the operation restriction process is not limited thereto, and some of the first to fourth operation restriction processes described for the first embodiment may be combined.

For example, when reproducing a portion of multimedia data whose importance is relatively high, image display may be carried out without performing operation restriction on the video/audio output unit 14 in the data reproduction unit 110c. When reproducing a portion of multimedia data whose importance is medium, image display by the video/audio output unit 14 may be carried out at a luminance level lower than the normal luminance level. When reproducing a portion of multimedia data whose importance is relatively low, image display by the video/audio output unit 14 may be carried out without performing voice output.

Furthermore, while in this third embodiment the relative data Dre indicates the importance which set on each portion of the multimedia data obtained by dividing the multimedia data according to the playback time, the relevant data may include contents attribute information indicating a relevant term other than the importance.

For example, there is a case where the relevant data includes contents attribute information indicating "category" of multimedia data. In this case, when it is judged from the relevant data that the importance of the multimedia data is low and the category thereof is "news", the reproduction control unit 15c may perform only voice output without performing image output (image display) by restricting the operation of the reception unit 11 when reproducing the multimedia data. Further, when it is judged from the relevant data that the importance of the multimedia data is low and the category thereof is "sports", the reproduction control unit 15c may perform only image display without performing voice output by restricting the operation of the reception unit 11.

In this third embodiment, the data reproduction apparatus 100c previously judges whether operation restriction on the reception unit is possible or not, on the basis of the data structure of the coded multimedia data, when restricting the reproduction process for the coded multimedia data by restricting the operation of the reception unit 11. However, when the relevant data indicates whether the coded multimedia data allows operation restriction on the reception unit 11 or not, the data reproduction apparatus may perform operation restriction on the reception unit 11 or operation restrictions on the decoding unit 13 and the video/audio output unit 14 on the basis of the relevant data alone.

Further, in this third embodiment, the data reproduction apparatus 100c obtains the coded multimedia data and the corresponding relevant data from the same server SA. However, when the multimedia data and the corresponding relevant data are stored in different servers, the data reproduction apparatus obtains the respective data from the difference servers.

[Embodiment 4]

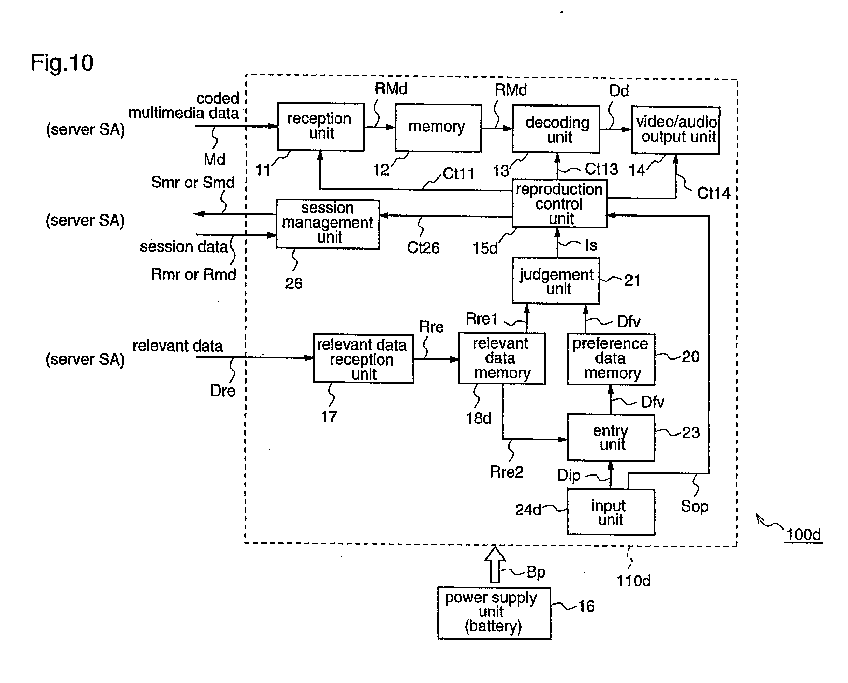

Figure 10 is a block diagram for explaining a data reproduction apparatus according to a fourth embodiment of the present invention.

A data reproduction apparatus 100d according to the fourth embodiment is provided with, instead of the data reproduction unit 110a of the data reproduction apparatus 100a according to the first embodiment, a data reproduction unit 110d which restricts an operation for reproducing multimedia data, on the basis of the degree of importance which is determined from relative data Dre relating to the multimedia data, and from preference data Dfv that indicates preferences of the user and is previously recorded in the data reproduction apparatus 100d.

The data reproduction unit 110d is provided with a reception unit 11, a memory 12, a decoding unit 13, a video/audio output unit 14, a session management unit 26, a relative data reception unit 17, a relative data memory 18d, a reproduction control unit 15d, and an input unit 24, like the data reproduction unit 110c according to the third embodiment. The reception unit 11, the memory 12, the decoding unit 13, the video/audio output unit 14, the relative data reception unit 17, and the session management unit 26 are identical to those described for the third embodiment.

Further, the data reproduction unit 110d includes a preference data memory 20 in which preference data Dfv indicating preferences of the user is stored; and an entry unit 23 which obtains information Rre2 relating to the kinds of contents the user has obtained or the number of times the user has obtained the same contents, which information is included in the relative data stored in the relative data memory 18d, and generates the preference data Dfv indicating preferences of the user, and further, generates preference data Dfv indicating preferences of the user from information Dip relating to preferences of the user, which information is inputted by user operation from the input unit 24d, and outputs the preference data Dfv so generated to the preference data memory 20.

Furthermore, the data reproduction unit 110d includes a judgement unit 21 which determines the degree of importance of the multimedia data from the attribute information Dre1 of the multimedia data which is included in the relative data Dre relating to the multimedia data, and the preference data Dfv stored in the preference data memory 20, and outputs information indicating the degree of importance (importance information) Is to the reproduction control unit 15d.

The reproduction control unit 15d performs exchange of messages Smd and Rmd for obtaining the relative data Dre and the coded multimedia data Md with the server SA according to an operation signal Sop from the input unit 24d, and performs operation restrictions on the reception unit 11, the decoding unit 13, and the video/audio output unit 14 on the basis of the importance information Is.

Further, as for operation restriction for suppressing consumption of the battery power in the data reproduction apparatus 100d according to this fourth embodiment, at least one operation among the operations of the reception unit 11, the decoding unit 13, and the video/audio output unit 14 is restricted as in the first embodiment and, more specifically, a process selected by the user from among the first to fourth operation restriction processes described for the first embodiment is carried out on the basis of the importance information Is.

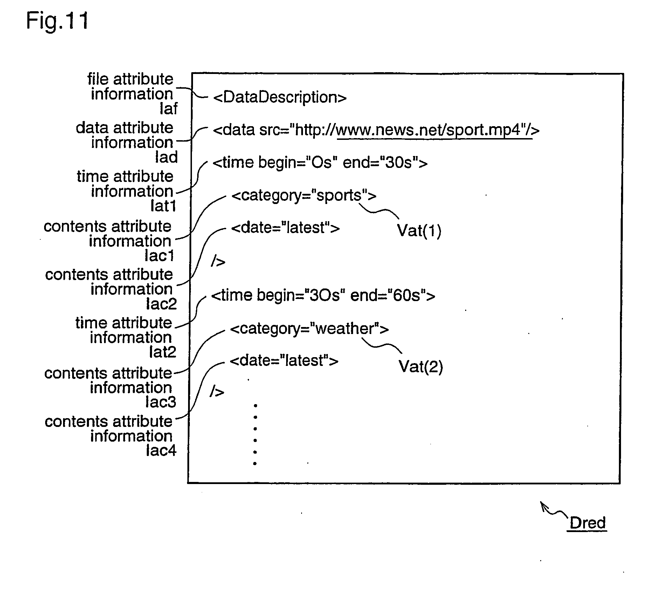

Figure 11 is a diagram for explaining an example of a description Dred of the relative data Dre.

With reference to figure 11, a character string Iaf in the first line in the description Dred of the relative data Dre is identical to the file attribute information shown in figure 9, and indicates that this description Dred is a description relating to the contents of multimedia data. Further, a character string Iad in the second line in the description Dred is identical to the data attribute information shown in figure 9, and indicates that the relative data Dre relates to multimedia data "sport.mp4" which is stored in a place "www.news.net/" on the network. Further, character strings Iat1 and Iat2 in the third and seventh lines in the description Dred are identical to the time attribute information shown in figure 9.

There are proposed many methods for sorting the contents of the multimedia data in the relative data. In figure 11, a character string [category] Iac1 in the fourth line in the description Dred is information indicating a contents attribute (contents attribute information), and the value of the contents attribute is [sports] . Therefore, the contents attribute information Iac1 indicates that this multimedia data is information relating to sports.

Further, a character sting [data] Iac2 in the fifth line in the description Dred is information indicating a contents attribute (contents attribute information), and the value of the contents attribute is [latest] . Therefore, this contents attribute information Iac2 indicates that the multimedia data is the latest data.

Accordingly, it is known from the time attribute information Iat1 and the contents attribute information Iac1 and Iac2 that a portion of the multimedia data during a playback time from 0 sec to 30 sec is information relating to the latest sports.

Likewise, it is known from time attribute information Iat2 and contents attribute information Iac3 and Iac4 that a portion of the multimedia data during a playback time from 30 sec to 60 sec is information relating to the latest weather.

In the relevant data, the multimedia data can be sorted on the basis of the priority, target generation, popularity, area, characters, and the like.

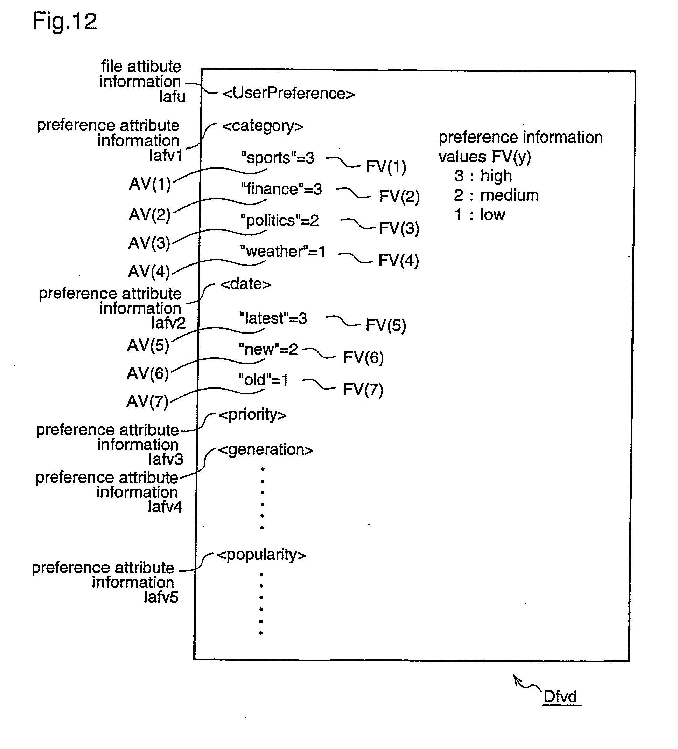

Figure 12 is a diagram illustrating an example of preference data stored in the preference data memory 20.

The data relating to the preferences of the user (preference data) is also described by combinations of intrinsic character strings indicating attributes, and attribute values of the attributes, like the data relating to the multimedia data (relative data).

With reference to figure 12, a character string <UserPreference> Iafu in the first line in a description Dfvd of the preference data Dfv is information indicating a file attribute (file attribute information), which indicates that the description Dfvd is a description relating to the preferences of the user. In the preference data, the preferences of the user are sorted according to the attributes (kinds), and a preference information value FV(y) indicating the priority of the user preference is set on an attribute value AV(x) of each attribute. Here, concrete attribute values AV(x) are AV(1)~AV(7), and concrete preference information values FV(v) are FV (1)~FV (7) .

For example, attribute values AV(1), AV(2), AV(3), and AV(4) of a preference attribute <category> indicated by preference attribute information Iafv1 are assigned "sports", "finance", "politics", and "weather", respectively, and attribute values AV(5), AV(6), and AV(7) of a preference attribute <date> indicated by preference attribute information Iafv2 are assigned "latest", "new", and "old", respectively.

The priorities of the user preferences corresponding to the respective attribute values AV(1) ~AV(7) are set by indices as preference information values FV(y). In the description Dfvd of the preference data shown in figure 12, the attribute values AV (1), AV(2), AV(3), AV(4), AV (5), AV(6), and AV(7) are assigned preference information values FV (1) (=3), FV(2)(=3), FV(3) (=2), FV (4)(=1), FV(5) (=3), FV (6) (=2), and FV (7) (=1), respectively. The larger the preference information value FV(y) is, the higher the priority indicated by the value is.

Furthermore, methods for entering the user preferences corresponding to the description Dfvd shown in figure 12 are as follows: (i) a method of directly entering information of user preferences by the user, and storing preference data indicating the user preferences in the preference data memory 20 (first entry method), (ii) a method of estimating preferences of the user by the data reproduction apparatus 100d on the basis of the relative data, and storing preference data corresponding to the estimated user preferences in the preference data memory 20 (second entry method), and (iii) a method of obtaining preference data indicating preferences of the user from a predetermined server on the network, and storing the obtained preference data in the preference data memory 20 (third entry method).

The data reproduction apparatus 100d according to the fourth embodiment employs the above-described first entry method and the second entry method as the method for entering the user preferences. Hereinafter, these entry methods will be described in detail hereinafter.

(i) Specific description of first entry method

When the user enters information relating to his/her preferences in the input unit 24d by using a keyboard or the like, the input unit 24d outputs information Dip relating to the user preferences to the entry unit 23. Then, the entry unit 23 outputs preference data Dfv indicating the information Dip supplied from the input unit 24d to the preference data memory 20, and the preference data memory 20 holds the preference data Dfv from the entry unit 23.

The preference data memory 20 is not limited to one constituted by a memory chip that is incorporated in the data reproduction apparatus 100d, but it may be a data recording unit which writes or reads the preference data Dip in/ from a recording medium that is removably mounted on the data reproduction apparatus 100d. In this case, writing of the preference data Dip into the recording medium by the user may be carried out using a personal computer or the like. For example, when the recording medium is loaded on a personal computer and entry of information relating to user preferences is made by user operation onto a data input part of the personal computer, preference data is written in the recording medium by processing in the personal computer. When the recording medium in which the preference data is recorded is loaded on the data reproduction apparatus, the preference data recorded in the recording medium is utilized in a predetermined processing unit in the data reproduction apparatus.

(ii) Specific description of second entry method

The entry unit 23 obtains information Rre2 relating to the kinds of the contents (multimedia data) the user has viewed or the number of times the user has obtained the same contents, from the relative data Rre stored in the relative data memory 18, and outputs the information Rre2 to the preference data memory 20. Then, in the preference data memory 20, the preference data Dfv indicating the preferences of the user is updated according to the kinds or the number of times. That is, the preference data Dfv stored in the preference data memory 20 is automatically updated by the entry unit 23 with updation of the relevant data stored in the relevant data memory 18d.

Next, the operation of the data reproduction apparatus 100d according to the fourth embodiment will be described.

It is premised that the information Dip indicating the user preferences has already been entered in the data reproduction apparatus 100d by the user, and this information Dip is stored as preference data Dfv in the preference data memory 20.

As described above, entry of the information relating to the user preferences is carried out by that the user enters the information relating to his/her preferences to the input unit 24d by using a keyboard or the like.

In the data reproduction apparatus 100d of the fourth embodiment, the operations of the reception unit 11, the memory 12, the decoding unit 13, the video/audio output unit 14, the relative data reception unit 17, and the session management unit 26 are identical to the operations of those of the data reproduction apparatus 100c according to the third embodiment.

That is, in the data reproduction apparatus 100d, when the session management unit 26 transmits a relevant data request message Smr to the server SA, the relevant data Dre is transmitted from the server SA. Further, when the session management unit 26 transmits a multimedia data request message Smd to the server SA, the coded multimedia data Md is transmitted from the server SA.

Then, in the data reproduction apparatus 100d, reproduction of the coded multimedia data Md from the server SA is carried out on the basis of the relevant data Dre and the preference data Dfv stored in the preference data memory 20.

Hereinafter, a description will be given of the operation in the case where the restriction mode is set to the data reproduction apparatus 100d.

The relevant data reception unit 17 receives the relevant data Rre transmitted from the server SA, and the received relevant data Rre is stored in the relevant data memory 18.

The reproduction control unit 15d restricts the operation of at least one of the reception unit 11, the decoding unit 13, and the video/audio output unit 14, on the basis of the importance Is of the multimedia data, which is obtained from the multimedia data attribute information Rre1 of the relevant data Rre stored in the relevant data memory 18, and the preference data Dfv stored in the preference data memory 20.

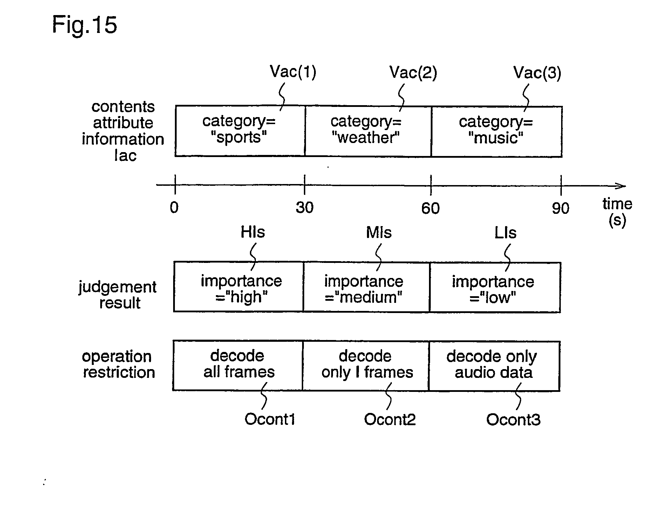

In this fourth embodiment, it is predetermined by the user that either the second operation restriction process (process of restricting frames to be reproduced) or the third operation restriction process (process of reproducing only either of audio data and video data) should be carried out according to the importance of the multimedia data. To be specific, as shown in figure 15, when reproducing a portion Vac1 of the multimedia data having high importance, a normal decoding process Ocont1 of decoding data of all frames is carried out. When reproducing a portion Vac2 of medium importance, the second operation restriction process Ocont2 of decoding only data of I frames is carried out. When reproducing a portion Vac3 of low importance, the third operation restriction process Ocont3 of decoding only audio data is carried out.

Hereinafter, the operation restriction processes by the reproduction control unit 15d will be described in detail.

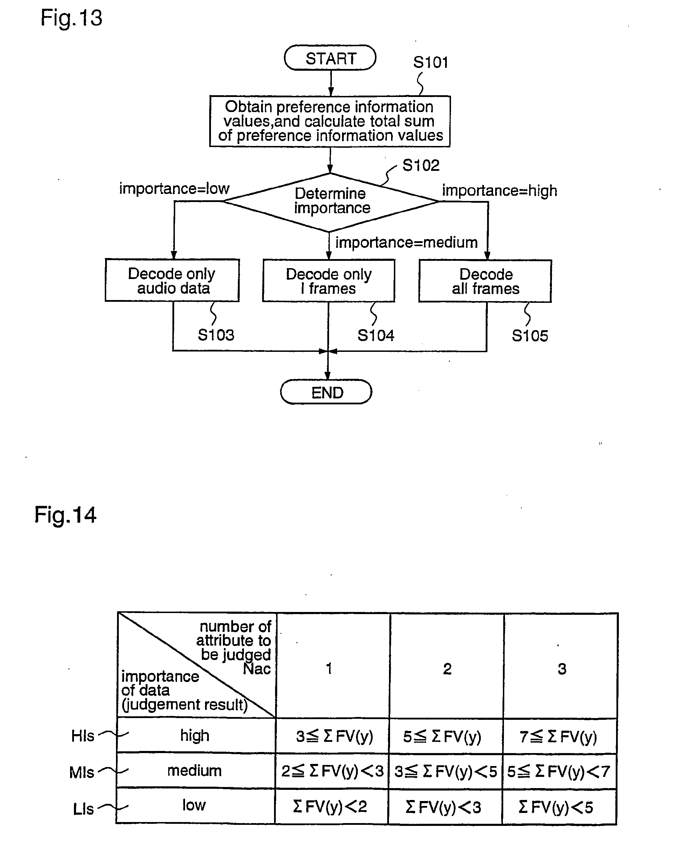

Figure 13 shows the flow of processes to be performed by the judgement unit 21 and the reproduction control unit 15d.

Initially, the judgement unit 21 obtains the contents attribute information Iac1~Iac4 which are the attribute information Rre1 included in the relevant data Rre stored in the relevant data memory 18, and judges, for each attribute indicated by the obtained contents attribute information, as to whether preference attribute information indicating an attribute that matches the attribute indicated by the contents attribute information is included in the preference data Dfv stored in the preference data memory 20 or not.

When the preference attribute information whose attribute matches the attribute of the contents attribute information of the relevant data Rre is included in the preference data Dfv, the judgement unit 21 obtains the preference information value FV(y) corresponding to the target attribute; otherwise, a prepared value FV(fix) is used as the preference information value FV(y). Further, when the relevant data Dre includes a plurality of contents attribute information Iac and the attribute matching judgement between the contents attribute information included in the relevant data and the preference attribute information included in the preference data is carried out for the plural attributes, the total sum of the preference information values FV(y) of all attributes as judgement targets is calculated (step S101).

Next, the judgement unit 21 compares the total sum of the preference information values FV(y) with a threshold value that is previously set according to the number of attributes to be judged, thereby to determine the importance of the multimedia data, and outputs information indicating the importance (importance information) Is (step S102).

Figure 14 shows an example of a threshold value to be used for the judgement of importance in the judgement unit 21.

With reference to figure 14, in the case where the number Nac of the contents attribute information Iac included in the relevant data Dre is two, when the sum total $\Sigma FV(y)$ of the preference information values FV(y) is equal to or larger than 5 ($5 \leqq \Sigma FV(y)$), equal to or larger than 3 and smaller than 5 ($3 \geqq \Sigma FV(y) < 5$), and smaller than 3 ($\Sigma FV(y)$

<3), the importance becomes [high] level HIs, [medium] level MIs, [low] level LIs, respectively.

For example, in the description Dred of the relevant data Dre shown in figure 11, it is known that a portion of the multimedia data during a playback time from 0 sec to 30 sec is information relating to the latest sports, from the time attribute information Iat1, the contents attribute information Iac1, and the contents attribute information Iat2. Further, in the description Dfvd of the preference data Dfv, the attribute value AV(1) [sports] of the preference attribute <category>.indicated by the preference attribute information Iafv1, and the attribute value AV(5) [latest] indicated by the preference attribute information Iafv2, which correspond to the contents attribute information Iac1 and the contents attribute information Iac2, respectively, are assigned the preference information value FV(1)(=3) and the preference information value FV(5)(=3), respectively. Therefore, the total sum $\Sigma FV(y)$ (=FV(1) + FV(5)) of the preference information values calculated in step S101 becomes 6 (=3+3).

Furthermore, since, in this case, the number of attributes to be judged is two (i.e., the attribute indicated by the contents attribute information Iac1 and the attribute indicated by the contents attribute information Iac2), the judgement unit 21 judges that the importance of the portion of the multimedia data during the playback time from 0 sec to 30 sec is at the [high] level HIs.

Then, the reproduction control unit 15d controls the decoding unit 13 so as to decode the data of all frames, on the basis of the importance information Is outputted from the judgement unit 21 (step S105).

Further, when the judgement unit 21 judges that the importance of the portion of the multimedia data during the playback time from 0 sec to 30 sec is at the [medium] level, the reproduction control unit 15d controls the decoding unit 13 so as to decode only the data of I frames, on the basis of the importance information Is outputted from the judgement unit 21 (step S104). Further, when the judgement unit 21 judges that the importance of the portion of the multimedia data during the playback time from 0 sec to 30 sec is at the [low] level, the reproduction control unit 15d controls the decoding unit 13 so as to decode only the audio data, on the basis of the importance information Is outputted from the judgement unit 21 (step S103).

The operation restrictions in steps S104 and S103 are not limited to decoding of specific data. As described for the first embodiment, the following operation restrictions are also applicable: (1) restriction (change) on luminance, (2) restriction on frames, (3) restriction on audio or video, (4) restriction in the case where multimedia data are hierarchical coded, and some of these restrictions may be combined.

Figure 15 shows an example of switching of operation restriction by the reproduction control unit 15d according to the fourth embodiment.

With reference to figure 15, the attribute value of the contents attribute information Iac of the multimedia data is successively changed in order of "attribute value [sports] Vat (1)" → "attribute value [weather] Vat(2)" → "attribute value [music] Vat (3) ", at every 30 seconds. Further, the judgement results of importances of these contents attribute values are [high] level HIs, [medium] level MIs, and [low] LIs, respectively, and the operation restriction processes corresponding to the judged importances are set at "decoding of all frames (Ocont1)", "decoding of only I frames (Ocont2)", and "decoding of only audio frames (Ocont3)" as shown in figure 15. In this case, the reproduction control unit 15d changes the operation restriction process on the decoding unit 13, in order of "decoding of all frames (Ocont1)" → "decoding of only I frames (Ocont2)" → "decoding of only audio frames (Ocont3)", at every 30 seconds from the start of playback.

As described above, the data reproduction apparatus 100d according to the fourth embodiment is provided with the relevant data reception unit 17 for receiving the relevant data Dre as data relating to the multimedia data, the preference data memory 20 for holding the preference data Dfv relating to the user preferences, the judgement unit 21 for judging the importance of the received coded multimedia data on the basis of the relevant data and the preference data, and the reproduction control unit 15d for restricting the operation of reproducing the coded multimedia data, according to the importance. Therefore, in addition to the effect that long-hours data reproduction becomes possible by suppressing consumption of power from the battery 16 as described for the first embodiment, the operation of reproducing the multimedia data can be restricted according to the contents of the multimedia data, and the preferences of the user.

Furthermore, when the importance changes with the lapse of time from starting reproduction of the multimedia data, reproduction restriction on one multimedia data minutely changes with the lapse of time. Therefore, it is not necessary for the user to set the operation restrictions on the portions of the multimedia data corresponding to different contents such as sports, weather report, news, and the like.

While in the fourth embodiment the total sum of the information values of the preference attribute information whose attributes match the attributes of the contents attribute information included in the relevant data is used as an index for judging the importance of the multimedia data, this index may be an average of the information values of the preference attribute information whose attributes match the attributes of the contents attribute information of the relevant data. Alternatively, the information value of the preference attribute information corresponding to each contents attribute information may be weighted, and the information value of the weighted preference attribute information may be used.

Further, while in this fourth embodiment the threshold value to be used for the judgement of importance is a fixed value that is predetermined according to the number of attributes to be judged, a threshold value to be used for the judgement of importance of each multimedia data may be calculated according to a predetermined rule.

Furthermore, while in this fourth embodiment three levels, i.e., high level HIs, medium level MIs, and low level LIs, are set as levels of importance, five or more levels may be set as levels of importance.

Moreover, in this fourth embodiment, different threshold values to be used for the judgement of importance are set for the respective cases where the number of attributes to be subjected to the judgement of importance (the number of attributes to be judged) is one, where the number of attributes to be judged is two, and where the number of attributes to be judged is three. However, the threshold values for the judgement of importance may be other than those corresponding to the above-mentioned three cases.

[Embodiment 5]

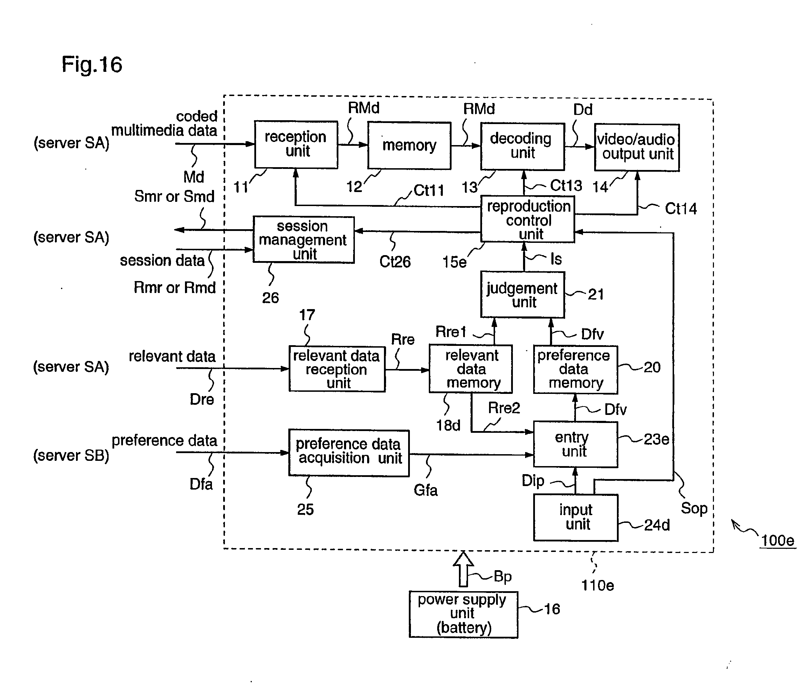

Figure 16 is a block diagram for explaining a data reproduction apparatus according to a fifth embodiment of the present invention.

A data reproduction apparatus 100e according to the fifth embodiment is provided with, instead of the data reproduction unit 110d of the data reproduction apparatus 100d according to the fourth embodiment, a data reproduction unit 110e which restricts the operation of reproducing multimedia data on the basis of an importance that is determined from relevant data Dre relating to the multimedia data and from preference data Dfv indicating the preferences of the user, which data Dvf is stored in the data reproduction apparatus 100d, and obtains preference data Dfa from a server SB on the network.

The data reproduction unit 110e is provided with a reception unit 11, a memory 12, a decoding unit 13, a video/audio output unit 14, a reproduction control unit 15e, a relative data reception unit 17, a relative data memory 18d, a preference data memory 20, an entry unit 23e, an input unit 24d, and a session management unit 26, like the data reproduction unit 110d according to the fourth embodiment. The reception unit 11, the memory 12, the decoding unit 13, the video/audio output unit 14, the relevant data reception unit 17, the relevant data memory 18, the preference data memory 20, the judgement unit 21, the input unit 24d, and the session management unit 26 are identical to those described for the fourth embodiment.

Further, the data reproduction unit 110e is provided with a preference data acquisition unit 25 for obtaining the preference data Dfa from the server SB on the network.

The entry unit 23e of the data reproduction unit 110e obtains information Rre2 relating to the kinds of contents the user has obtained or the number of times the user has obtained the same contents, which information Rre2 is included in the relevant data stored in the relevant data memory 18d, and generates preference data Dfv indicating the preferences of the user. Further, the entry unit 23e generates preference data Dfv indicating the preferences of the user from information Dip relating to the preferences of the user, which information Dip is entered from the input unit 24d by user operation, and outputs the generated preference data Dvf to the preference data memory 20, and further, outputs preference data Gfa obtained by the preference data acquisition unit 25 to the preference data memory 20.

The reproduction control unit 15e controls the session management unit 26 so as to perform exchange of messages Smr, Smd, Rmr, and Rmd for obtaining the relevant data Dre and the multimedia data Md, with the server SA, according to an operation signal Sop from the input unit 24d. Further, the reproduction control unit 15e controls the session management unit 26 so as to perform exchange of messages for obtaining the preference data Dfa, with another server SB, according to the operation signal Sop from the input unit 24d. Further, the reproduction control unit 15e performs operation restrictions on the reception unit 11, the decoding unit 13, and the video/audio output unit 14 on the basis of the importance information Is.

The other constituents of the data reproduction apparatus 100e according to the fifth embodiment are identical to those according to the fourth embodiment.

Next, the operation of the data reproduction apparatus 100e will be described.

The operation of the data reproduction apparatus 100e according to the fifth embodiment is different from the operation of the fourth embodiment only in that a third entry process of obtaining preference data from the server SB on the network and storing the data in the preference data memory 20 is carried out in addition to the first and second entry processes described for the fourth embodiment. That is, the other operations of the data reproduction apparatus 100e according to the fifth embodiment are identical to those of the data reproduction apparatus 100d according to the fourth embodiment and, therefore, only the operation of the data reproduction apparatus 100e for performing the third entry process will be briefly described hereinafter.

That is, the reproduction control unit 15e of the data reproduction apparatus 100e according to the fifth embodiment controls the session management unit 26 so as to perform exchange of messages for obtaining the preference data Dfa, with the server SB, according to the operation signal Sop from the input unit 24d. Then, the preference data Dfa is transmitted from the server SB by message exchange between the session management unit 26 and the server SB.

The preference data Dfa transmitted from the server SB is received by the preference data acquisition unit 25, and the received preference data Gfa is supplied to the entry unit 23e.

The entry unit 23e transmits the preference information Dip supplied from the input unit 24d and the preference information Rre2 obtained from the relevant data Dre stored in the relevant data memory 18, as the preference data Dvf, to the preference data memory 20. Further, the entry unit 23e transmits the preference data Gfa supplied from the preference data acquisition unit 25, as the preference data Dfv, to the preference data memory 20.

As described above, the data reproduction apparatus 100e according to the fifth embodiment is provided with, instead of the data reproduction unit 110d of the fourth embodiment, the data reproduction unit 110e which obtains the preference data Dfa relating to the preferences of the user and stored in the predetermined server SB, and restricts the operation of reproducing the coded multimedia data on the basis of the preference information Dip supplied from the input unit 24d, the preference information Rre2 obtained from the relevant data Dre, and the preference data Gfa obtained from the server SB. Therefore, in addition to the effect that data reproduction for long hours becomes possible by suppressing consumption of power from the battery 16 as in the fourth embodiment, the operation of reproducing the multimedia data can be restricted according to the preference data of the user which is obtained from the server on the network, whereby restriction on the multimedia data reproduction operation can be made more suitable to the preferences of the user.

In the first to fifth embodiments of the present invention, the data reproduction apparatus is constituted such that the reproduction control unit (15a~15e) restricts the process of reproducing the multimedia data by restricting the operation of at least one of the reception unit 11, the decoding unit 13, and the video/audio output unit 14. However, the data reproduction apparatus may perform a data request so that the coded multimedia data supplied from the server is restricted to either the coded audio data or the coded video data included in the coded multimedia data.

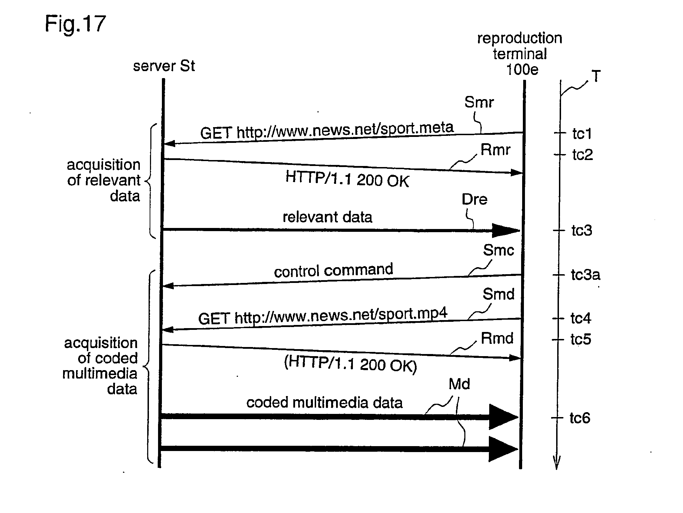

For example, when the data reproduction apparatus 100c according to the third embodiment performs a data request on the basis of the attributes of the multimedia data so that the coded multimedia data supplied from the server is restricted to either the coded audio data or the coded video data included in the coded data, as shown in figure 17, it is necessary to transmit a restriction command Smc which instructs the server SA to transmit only either of the coded video data and the coded audio data, after reception of the relevant data Rre, before performing exchange of the messages Smd and Rmd for obtaining the coded multimedia data.

Furthermore, in the first to fifth embodiments of the invention, the process of reproducing the multimedia data is restricted only when the restriction mode is set as the operation mode of the data reproduction apparatus by the user. However, whether the process of reproducing the multimedia data (hereinafter also referred to as "data reproduction process") in the data reproduction apparatus should be restricted or not, may be determined according to the amount of remaining battery power of the power supply unit 16, irregardless of the operation mode set by the user.

That is, even when the user set the operation mode of the data reproduction apparatus at the power-saving mode (restriction mode), if the amount of remaining battery power of the power supply unit 16 is larger than a predetermined reference value, restriction on the operation is not carried out. Further, even when the user sets the operation mode of the data reproduction apparatus at the normal power mode (non-restriction mode), when the amount of remaining battery power is smaller than the reference value, restriction on the operation is carried out.

Furthermore, in the data reproduction apparatus according to the third or fourth embodiment, even when the judgement unit 21 judges that the importance of the multimedia data is at the [low] level, restriction on the operation for the case where the importance is judged as the [medium] level may be carried out when the amount of remaining battery power of the power supply unit 16 is larger than the reference value.

Furthermore, in the threshold value to be used for judgement in the judgement unit 21 is a fixed value that is previously set. However, the threshold value may be varied according to the amount of remaining battery power of the power supply unit 16 such that multimedia data of higher importance (e.g., the rate of multimedia data whose importance is judged as the [high] level or [medium] level) may be increased, or by contrast, multimedia data of lower importance (e.g., the rate of multimedia data whose importance is judged as the [medium] level or [low] level) may be increased.

Furthermore, while in the first to fifth embodiments the data reproduction apparatuses are implemented by hardware, these apparatuses may be implemented by software. In this case, a program for performing the data reproduction process according to any of the above-mentioned embodiments is recorded on a data storage medium such as a flexible disk, whereby the data reproduction process can be constituted in an individual computer system.

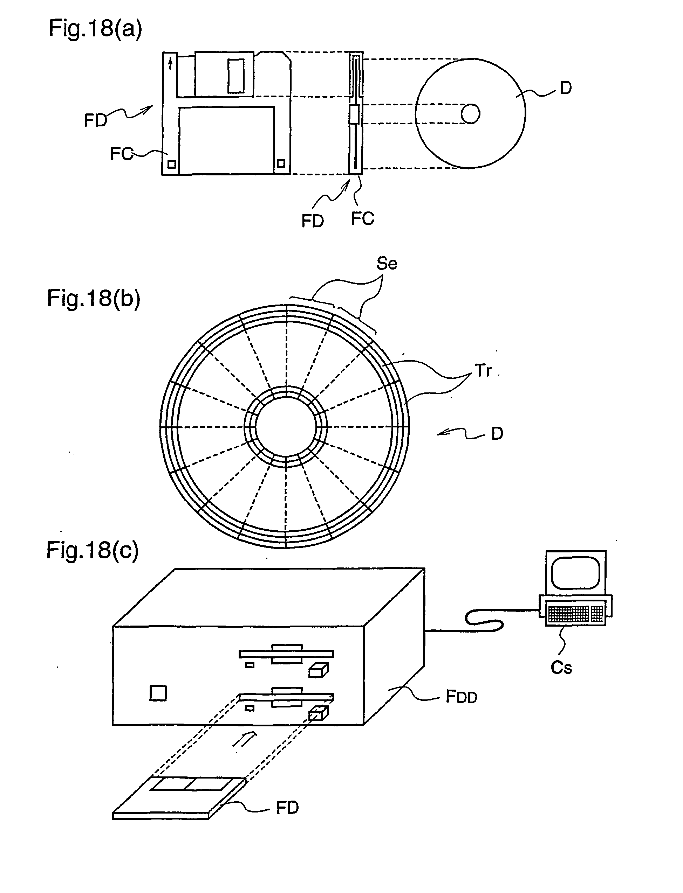

Figures 18(a)-18(c) are diagrams for explaining a storage medium which contains a program for performing, with software, the data reproduction process of the data reproduction apparatus according to any of the first to fifth embodiments, and a computer system including the storage medium.

Figure 18(a) shows a front view of a flexible disk, a cross-sectional view thereof, and a flexible disk body, and figure 18(b) shows an example of a physical format of the flexible disk.

To be specific, the flexible disk FD is composed of the flexible disk body D and a flexible disk case FC that contains the flexible disk body D. On the surface of the flexible disk body D, plural tracks Tr are concentrically formed from the outer circumference toward the inner circumference. Each track Tr is divided into 16 sectors Se at equal angles along the circumference. Accordingly, in the flexible disk FD where the above-described program is stored, data as the program is recorded in the sectors Se assigned onto the flexible disk body D.

Further, figure 18(c) shows a configuration for recording the program on the flexible disk FD, and a configuration for performing data processing by software using the program recorded on the flexible disk FD.

When recording the program on the flexible disk FD, data as the program supplied from a computer system Cs is written in the flexible disk FD via a flexible disk drive FDD. On the other hand, when constituting the data reproduction apparatus according to any of the first to fifth embodiments in the computer system Cs using the program recorded on the flexible disk FD, the program is read from the flexible disk FD by the flexible disk drive FDD, and loaded onto the computer system Cs.

While in the above description a flexible disk is employed as a data storage medium, an optical disc may be employed. Also in this case, the data reproduction process by software can be carried out in the same manner as described for the flexible disk. Furthermore, the data storage medium is not restricted to the flexible disk and the optical disc. Any medium, such as an IC card or a ROM cassette, may be employed so long as the program can be recorded in the medium. Also in the case of using these data storage mediums, the data reproduction process by software can be carried out in the same manner as described for the flexible disk.

APPLICABILITY IN INDUSTORY

As described above, the present invention relates to a battery-operated data reproduction apparatus whose operation for reproducing multimedia data is restricted so as to reduce consumption of battery power, whereby the user can utilize moving picture distribution services or the like for long hours. Thus, the present invention is applicable to portable terminals, such as handy phones, which utilize various kinds of data distribution services.

**Claims**

1. A data reproduction apparatus (100a~100e) for receiving coded data of multimedia data and reproducing the coded data, which is operated by a power supplied from a battery, said apparatus comprising:

   a reception unit (11) for receiving the coded data;
   a decoding unit (13) for decoding the received coded data to output decoded data;
   an output unit (14) for outputting image or voice on the basis of the decoded data; and
   a control unit (15a~15e) for restricting the operation of at least one of the reception unit, decoding unit, and output unit according to attributes of the multimedia data, so as to suppress consumption of the battery power, said apparatus being **characterized in that**
   said control unit (15a~15e) judges, according to data structure of the coded data, that operation of which unit among the reception unit, decoding unit, and video/audio output unit can be restricted, and restricts the operation of the unit closer to an input end of the apparatus among the units the operations of which are judged as capable of being restricted.

2. A data reproduction apparatus (100c)~(100e) as defined in Claim 1 further including:

   a relevant data acquisition unit (17) for obtaining relevant data relating to the multimedia data from a terminal on a network; and
   said control unit (15a)~(15e) performing the operation restriction on the basis of the attributes of the multimedia data indicated by the relevant data.

3. A data reproduction apparatus (100b) as defined in Claim 1 further including:

   a data storage unit (25) for holding the received coded data; and
   said control unit (15b) controlling the data storage unit (25) so as to hold only a portion of the coded data on the basis of the relevant data.

4. A data reproduction apparatus (100b) as defined in Claim 3, wherein said control unit (15b) controls the data storage unit (25) so as to store only either of coded video data and coded audio data which are included in the coded data.

5. A data reproduction apparatus (100d) as defined in Claim 1 further including:

   a relevant data acquisition unit (17) for obtaining the relevant data relating to the multimedia data from a terminal on a network;

a preference data storage unit (20) in which preference data indicating user's preference is stored;
a judgement unit (21) for judging the degree of importance of the received coded data on the basis of the relevant data and the preference data stored in the preference data storage unit; and
said control unit (15d) performing the operation restriction on the basis of the degree of importance of the coded data, which is judged by the judgement unit (21).

6. A data reproduction apparatus (100a~100e) as defined in Claim 1, wherein said control unit (15a~15e) performs restriction on the operation according to the amount of remaining battery power.

7. A data reproduction apparatus (100a~100e) as defined in Claim 1 wherein
said output unit (14) performs image display on the basis of the coded data; and
said control unit (15a~15e) restricts the operation of the output unit so as to reduce a luminance level at the image display.

8. A data reproduction apparatus (100a~100e) as defined in Claim 1, wherein said control unit (15a~15e) performs the operation restriction so as to decode or output only data corresponding to specific frames, among the coded video data included in the coded data.

9. A data reproduction apparatus (100a~100e) as defined in Claim 1, wherein said control unit (15a~15e) performs the operation restriction so as to receive, decode, or output only either of coded video data and coded audio data which are included in the coded data.

10. A data reproduction apparatus (100d, 100e) as defined in Claim 1, wherein said control unit (15d, 15e) performs the operation restriction so as to decode or output only data of a high priority among the coded data, on the basis of the attributes of the multimedia data.

11. A data reproduction apparatus (100a~100e) as defined in Claim 1 wherein
the coded data is hierarchically-coded data which has been obtained by hierarchically coding the multimedia data while separating the multimedia data into a base layer and an addition layer; and
said control unit (15a~15e) performs the operation restriction so as to receive, decode, or output only data corresponding to the base layer among the coded data.

12. A data reproduction apparatus (100b) as defined in Claim 11 further including:

a data storage unit (25) for holding the received coded data; and
said control unit (15b) controlling the data storage unit (25) so as to hold only the coded data corresponding to the base layer, on the basis of the attributes of the multimedia data.

13. A data reproduction method for receiving coded data of multimedia data and reproducing the coded data, by a power supplied from a battery, said method comprising:

a reception step (11) of receiving the coded data;
a decoding step (13) of decoding the received coded data to generate decoded data;
an output step (14) of outputting image or voice on the basis of the decoded data; and
a control step (15a~15e) of controlling at least one operation among the reception, decoding, and outputting, according to attributes of the multimedia data, so as to suppress consumption of the battery power,
said method being **characterized by**,
in said control step (15a~15e), judging, according to data structure of the coded data, which operation among the receiving, decoding, and outputting can be restricted, and restricting an operation which is earlier performed among the operations judged as capable of being restricted.

14. A data reproduction method as defined in Claim 13 further including:

a relevant data acquisition step (17) of obtaining the relevant data relating to the multimedia data from a terminal on a network;
a judgement step (21) of judging the degree of importance of the received coded data on the basis of the relevant data and preference data that is stored in a preference data storage unit; and
said control step (15d) restricting at least one operation among the reception, decoding, and reproduction on the basis of the degree of importance of the coded data, which is judged by the judgement step.

**15.** A program for making a computer execute a process of receiving coded data of multimedia data and reproducing the coded data by a power supplied from a battery, said program including:

a reception step (11) of receiving the coded data;
a decoding step (13) of decoding the received coded data to generate decoded data;
an output step (14) of outputting image or voice on the basis of the decoded data; and
a control step (15a~15e) of controlling at least one operation among the reception, decoding, and reproduction, according to attributes of the multimedia data, so as to suppress consumption of the battery power,
said method being **characterized by**,
in said control step (15a~15e), judging, according to data structure of the coded data, which operation among the receiving, decoding, and outputting can be restricted, and restricting an operation which is earlier performed among the operations judged as capable of being restricted.

**Patentansprüche**

**1.** Datenwiedergabevorrichtung (100a-100e) zum Empfangen kodierter Daten von Multimediadaten und zum Wiedergeben der kodierten Daten, die durch eine von einer Batterie zugeführte Energie betrieben wird, wobei die Vorrichtung umfasst:

eine Empfangseinheit (11) zum Empfangen der kodierten Daten;
eine Dekodiereinheit (13) zum Dekodieren der empfangenen kodierten Daten, um dekodierte Daten auszugeben;
eine Ausgabeeinheit (14) zum Ausgeben von Bild oder Ton auf der Basis der dekodierten Daten; und
eine Steuereinheit (15a-15e) zum Beschränken des Betriebs mindestens einer der Empfangseinheit, Dekodiereinheit und/oder Ausgabeeinheit entsprechend Eigenschaften der Multimediadaten, um den Verbrauch der Batterieenergie niedrig zu halten,

wobei die Vorrichtung **dadurch gekennzeichnet ist, dass**
die Steuereinheit (15a-15e) entsprechend der Datenstruktur der kodierten Daten beurteilt, von welcher Einheit - der Empfangseinheit, Dekodiereinheit oder Video-/Audio-Ausgabeeinheit - der Betrieb beschränkt werden kann, und beschränkt unter den Einheiten, deren Betrieb als zum Beschränken geeignet beurteilt wird, den Betrieb derjenigen Einheit, die näher an einem Eingabeende der Vorrichtung ist.

**2.** Datenwiedergabevorrichtung (100c-100e) nach Anspruch 1, ferner umfassend:

eine Beschaffungseinheit für relevante Daten (17) zum Beschaffen die Multimediadaten betreffender relevanter Daten von einem Anschluss in einem Netzwerk; wobei
die Steuereinheit (15a-15e) die Betriebsbeschränkung auf der Basis der Eigenschaften der Multimediadaten ausführt, die durch die relevanten Daten angezeigt werden.

**3.** Datenwiedergabevorrichtung (100b) nach Anspruch 1, ferner umfassend:

eine Datenspeichereinheit (25) zum Speichern der empfangenen kodierten Daten; wobei
die Steuereinheit (15b) die Datenspeichereinheit (25) steuert, um nur einen Teil der kodierten Daten auf der Basis der relevanten Daten aufzunehmen.

**4.** Datenwiedergabevorrichtung (100b) nach Anspruch 3, worin die Steuereinheit (15b) die Datenspeichereinheit (25) steuert, um entweder nur kodierte Videodaten oder kodierte Audiodaten, die in den kodierten Daten enthalten sind, zu speichern.

**5.** Datenwiedergabevorrichtung (100d) nach Anspruch 1, ferner umfassend:

eine Beschaffungseinheit für relevante Daten (17) zum Beschaffen der die Multimediadaten betreffenden relevanten Daten von einem Anschluss in einem Netzwerk;
eine Präferenzdaten-Speichereinheit (20), in der Anwenderpräferenzen anzeigende Präferenzdaten gespeichert sind;
eine Beurteilungseinheit (21) zum Beurteilen des Grades der Wichtigkeit der empfangenen kodierten Daten auf der Basis der relevanten Daten und der in der Präferenzdaten-Speichereinheit gespeicherten Präferenzdaten; wobei
die Steuereinheit (15d) die Betriebsbeschränkung auf der Basis des Grades der Wichtigkeit der kodierten Daten, der durch die Beurteilungseinheit (21) beurteilt wird, ausführt

6. Datenwiedergabevorrichtung (100a-100e) nach Anspruch 1, worin die Steuereinheit (15a-15e) eine Beschränkung des Betriebs entsprechend der Menge der verbleibenden Batterieenergie ausführt.

7. Datenwiedergabevorrichtung (100a-100e) nach Anspruch 1, worin
die Ausgabeeinheit (14) eine Bildausgabe auf der Basis der kodierten Daten ausführt; und
die Steuereinheit (15a-15e) den Betrieb der Ausgabeeinheit beschränkt, um ein Helligkeitsniveau bei der Bildausgabe zu reduzieren.

8. Datenwiedergabevorrichtung (100a-100e) nach Anspruch 1, worin
die Steuereinheit (15a-15e) die Betriebsbeschränkung ausführt, um unter den kodierten Videodaten, die in den kodierten Daten enthalten sind, nur diejenigen Daten zu dekodieren oder auszugeben, die bestimmten Frames entsprechen.

9. Datenwiedergabevorrichtung (100a-100e) nach Anspruch 1, worin
die Steuereinheit (15a-15e) die Betriebsbeschränkung ausführt, um entweder nur kodierte Videodaten oder nur kodierte Audiodaten, die in den kodierten Daten enthalten sind, zu empfangen, zu dekodieren oder auszugeben.

10. Datenwiedergabevorrichtung (100d,100e) nach Anspruch 1, worin
die Steuereinheit (15d,15e) die Betriebsbeschränkung ausführt, um unter den kodierten Daten auf der Basis der Eigenschaften der Multimediadaten nur Daten mit einer hohen Priorität zu dekodieren oder auszugeben.

11. Datenwiedergabevorrichtung (100a-100e) nach Anspruch 1, worin
die kodierten Daten hierarchisch-kodierte Daten sind, die durch hierarchisches Kodieren der Multimediadaten erhalten wurden, während die Multimediadaten in eine Basisschicht und eine Zusatzschicht separiert wurden; und
die Steuereinheit (15a-15e) die Betriebsbeschränkung ausführt, um unter den kodierten Daten nur Daten, die der Basisschicht entsprechen, zu empfangen, zu dekodieren oder auszugeben.

12. Datenwiedergabevorrichtung (100b) nach Anspruch 11, ferner umfassend:

eine Datenspeichereinheit (25) zum Speichern der empfangenen kodierten Daten; wobei
die Steuereinheit (15b) die Datenspeichereinheit (25) steuert, um auf der Basis der Eigenschaften der Multimediadaten nur die kodierten Daten, die der Basisschicht entsprechen, aufzunehmen.

13. Datenwiedergabeverfahren zum Empfangen kodierter Daten von Multimediadaten und zum Wiedergeben der kodierten Daten durch eine von einer Batterie zugeführte Energie, wobei das Verfahren umfasst:

einen Empfangsschritt (11) zum Empfangen der kodierten Daten;
einen Dekodierschritt (13) zum Dekodieren der empfangenen kodierten Daten, um dekodierte Daten zu erzeugen;
einen Ausgabeschritt (14) zum Ausgeben von Bild oder Ton auf der Basis der dekodierten Daten; und
einen Steuerschritt (15a-15e) zum Steuern wenigstens einer Operation - des Empfangs, der Dekodierung und/ oder Ausgabe - entsprechend Eigenschaften der Multimediadaten, um den Verbrauch der Batterieenergie niedrig zu halten,

wobei das Verfahren **dadurch gekennzeichnet ist, dass**
in dem Steuerschritt (15a-15e) entsprechend der Datenstruktur der kodierten Daten beurteilt wird, welche Operation - das Empfangen, Dekodieren oder Ausgeben - beschränkt werden kann, und eine Operation, die unter den als zum Beschränken geeignet beurteilten Operationen eher ausgeführt wird, beschränkt wird.

14. Datenwiedergabeverfahren nach Anspruch 13, ferner umfassend:

einen Beschaffungsschritt für relevante Daten (17) zum Beschaffen der die Multimediadaten betreffenden relevanten Daten von einem Anschluss in einem Netzwerk;
einen Beurteilungsschritt (21) zum Beurteilen des Grades der Wichtigkeit der empfangenen kodierten Daten auf der Basis der relevanten Daten und Präferenzdaten, die in einer Präferenzdatenspeichereinheit gespeichert sind; wobei
in dem Steuerschritt (15d) mindestens eine Operation - der Empfang, die Dekodierung und/oder Wiedergabe - auf der Basis des Grades der Wichtigkeit der kodierten Daten, der in dem Beurteilungsschritt beurteilt wird, beschränkt wird.

15. Programm, mit dem ein Computer ein Verfahren zum Empfangen kodierter Daten von Multimediadaten und zum Wiedergeben der kodierten Daten durch eine von einer Batterie zugeführte Energie ausführt, wobei das Programm umfasst:

einen Empfangsschritt (11) zum Empfangen der kodierten Daten;
einen Dekodierungsschritt (13) zum Dekodieren der empfangenen kodierten Daten, um dekodierte Daten zu erzeugen;
einen Ausgabeschritt (14) zum Ausgeben von Bild oder Ton auf der Basis der dekodierten Daten; und
einen Steuerschritt (15a-15e) zum Steuern wenigstens einer Operation - des Empfangs, der Dekodierung und/oder Wiedergabe - entsprechend Eigenschaften der Multimediadaten, um den Verbrauch der Batterieenergie niedrig zu halten,

wobei das Verfahren **dadurch gekennzeichnet ist, dass**
in dem Steuerschritt (15a-15e) entsprechend der Datenstruktur der kodierten Daten beurteilt wird, welche Operation - der Empfang, die Dekodierung oder Ausgabe - beschränkt werden kann, und eine Operation, die unter den als zum Beschränken geeignet beurteilten Operationen eher ausgeführt wird, beschränkt wird.

## Revendications

1. Dispositif de reproduction de données (100a à 100e) destiné à recevoir des données codées constituées de données multimédias et à reproduire les données codées, qui est actionné par une alimentation fournie par une batterie, ledit dispositif comprenant :

une unité de réception (11) destinée à recevoir des données codées,
une unité de décodage (13) destinée à décoder les données codées reçues afin de fournir en sortie des données décodées,
une unité de sortie (14) destinée à fournir en sortie une image ou de la voix sur la base des données décodées, et
une unité de commande (15a à 15e) destinée à limiter le fonctionnement d'au moins l'une de l'unité de réception, de l'unité de décodage, et de l'unité de sortie en fonction des attributs des données multimédias, de manière à réduire la consommation de l'énergie de la batterie,
ledit dispositif étant **caractérisé en ce que**
ladite unité de commande (15a à 15e) évalue, en fonction de la structure de données des données codées, de quelle unité parmi l'unité de réception, l'unité de décodage et l'unité de sortie vidéo/audio le fonctionnement peut être limité, et limite le fonctionnement de l'unité la plus proche d'une extrémité d'entrée du dispositif parmi les unités dont on a évalue que le fonctionnement peut être limité.

2. Dispositif de reproduction de données (100c) à (100e) selon la revendication 1, comprenant en outre :

une unité d'acquisition de données pertinentes (17) destinée à obtenir des données pertinentes se rapportant aux données multimédias à partir d'un terminal sur un réseau, et
ladite unité de commande (15a) à (15e) exécutant la limitation du fonctionnement sur la base des attributs des données multimédias indiquées par les données pertinentes.

3. Dispositif de reproduction de données (100b) selon la revendication 1, comprenant en outre :

une unité de mémorisation de données (25) destinée à conserver les données codées reçues, et
ladite unité de commande (15b) commandant l'unité de mémorisation de données (25) de manière à ne conserver qu'une partie des données codées sur la base des données pertinentes.

**4.** Dispositif de reproduction de données (100b) selon la revendication 3, dans lequel ladite unité de commande (15b) commande l'unité de mémorisation de données (25) de manière à ne mémoriser que celles des données vidéo codées et des données audio codées qui sont incluses dans les données codées.

**5.** Dispositif de reproduction de données (100d) selon la revendication 1, comprenant en outre :

une unité d'acquisition de données pertinentes (17) destinée à obtenir les données pertinentes se rapportant aux données multimédias à partir d'un terminal sur un réseau,
une unité de stockage de données de préférence (20), dans laquelle des données de préférence indiquant la préférence de l'utilisateur sont mémorisées,
une unité d'évaluation (21) destinée à évaluer le degré d'importance des données codées reçues sur la base des données pertinentes et des données de préférence mémorisées dans l'unité de mémorisation de données de préférence, et
ladite unité de commande (15d) exécutant la limitation de fonctionnement sur la base du degré d'importance des données codées, qui est évalué par l'unité d'évaluation (21).

**6.** Dispositif de reproduction de données (100a à 100e) selon la revendication 1, dans lequel ladite unité de commande (15a à 15e) exécute une limitation du fonctionnement en fonction de la quantité d'énergie restante dans la batterie.

**7.** Dispositif de reproduction de données (100a à 100e) selon la revendication 1, dans lequel
ladite unité de sortie (14) exécute un affichage d'image sur la base des données codées, et
ladite unité de commande (15a à 15e) limite le fonctionnement de l'unité de sortie de manière à réduire un niveau de luminance au niveau du dispositif d'affichage d'image.

**8.** Dispositif de reproduction de données (100a à 100e) selon la revendication 1, dans lequel ladite unité de commande (15a à 15e) exécute la limitation de fonctionnement de manière à ne décoder ou à ne fournir en sortie que des données correspondant à des trames spécifiques, parmi les données vidéo codées incluses dans les données codées.

**9.** Dispositif de reproduction de données (100a à 100e) selon la revendication 1, dans lequel ladite unité de commande (15a à 15e) exécute la limitation de fonctionnement de manière à ne recevoir, décoder ou fournir en sortie que les données vidéo codées et les données audio codées qui sont incluses dans les données codées.

**10.** Dispositif de reproduction de données (100d, 100e) selon la revendication 1, dans lequel ladite unité de commande (15d, 15e) exécute la limitation de fonctionnement de manière à ne décoder ou fournir en sortie que les données présentant une haute priorité parmi les données codées, sur la base des attributs des données multimédias.

**11.** Dispositif de reproduction de données (100a à 100e) selon la revendication 1, dans lequel
les données codées sont des données codées de manière hiérarchique qui ont été obtenues en codant de manière hiérarchique les données multimédias tout en séparant les données multimédias en une couche de base et une couche d'addition, et
ladite unité de commande (15a à 15e) exécute la limitation de fonctionnement de manière à ne recevoir, décoder, ou fournir en sortie que des données correspondant à la couche de base parmi les données codées.

**12.** Dispositif de reproduction de données (100b) selon la revendication 11, comprenant en outre :

une unité de mémorisation de données (25) destinée à conserver les données codées reçues, et
ladite unité de commande (15b) commandant l'unité de mémorisation de données (25) de manière à ne conserver que les données codées correspondant à la couche de base, sur la base dès attributs des données multimédias.

**13.** Procédé de reproduction de données destiné à recevoir des données codées constituées de données multimédias et à reproduire les données codées, par le biais d'une alimentation fournie depuis une batterie, ledit procédé comprenant :

une étape de réception (11) consistant à recevoir les données codées,
une étape de décodage (13) consistant à décoder les données codées reçues afin de générer des données décodées,
une étape de sortie (14) consistant à fournir en sortie une image ou de la voix sur la base des données décodées, et

une étape de commande (15a à 15e) consistant à commander au moins un fonctionnement parmi la réception, le décodage, et la fourniture en sortie, en fonction des attributs des données multimédias, de manière à réduire la consommation d'énergie de la batterie, ledit procédé étant **caractérisé par**, dans ladite étape de commande (15a à 15e) le fait d'évaluer, en fonction de la structure de données des données codées, quel fonctionnement parmi la réception, le décodage et la fourniture en sortie peut être limité, et le fait de limiter un fonctionnement qui est exécuté antérieurement parmi les fonctionnements évalués comme pouvant être limités.

14. Procédé de reproduction de données selon la revendication 13, comprenant en outre :

une étape d'acquisition de données pertinentes (17) consistant à obtenir les données pertinentes se rapportant aux données multimédias à partir d'un terminal sur un réseau, une étape d'évaluation (21) consistant à évaluer le degré d'importance des données codées reçues sur la base des données pertinentes et des données de préférence qui sont mémorisées dans une unité de mémorisation de données de préférence, et ladite étape de commande (15d) limitant au moins un fonctionnement parmi la réception, le décodage, et la reproduction sur la base du degré d'importance des données codées, qui est évalué par le biais de l'étape d'évaluation.

15. Programme destiné à amener un ordinateur à exécuter un traitement de réception de données codées constituées de données multimédias et de reproduction des données codées par le biais d'une alimentation fournie depuis une batterie, ledit programme comprenant :

une étape de réception (11) consistant à recevoir les données codées, une étape de décodage (13) consistant à décoder les données codées reçues afin de générer des données décodées, une étape de sortie (14) consistant à fournir en sortie une image ou de la voix sur la base des données décodées, et une étape de commande (15a à 15e) consistant à commander au moins un fonctionnement parmi la réception, le décodage et la reproduction, conformément à des attributs des données multimédias de manière à réduire la consommation de l'énergie de la batterie, ledit procédé étant **caractérisé par** dans ladite étape de commande (15a à 15e) le fait d'évaluer, en fonction de la structure de données des données codées, quel fonctionnement parmi la réception, le décodage et la fourniture en sortie peut être limité, et le fait de limiter un fonctionnement qui est exécuté antérieurement parmi les fonctionnements évalués comme pouvant être limités.

EP 1 461 954 B1

Fig.1

## Fig.2(a)

server SA

reproduction
terminal
100a

Smd

GET http://www.news.net/sport.mp4

ta1

Rmd

ta2

acquisition
of coded
multimedia data

(HTTP/1.1 200 OK)

Md

coded multimedia data

ta3

T

## Fig.2(b)

S1

Operation
of reception unit can be
restricted?

YES

S2

Restrict operation
of reception unit

NO

S3

Operation
of decoding unit can be
restricted?

YES

S4

Restrict operation
of decoding unit

NO

S5

Operation
of video/audio output unit
can be restricted
?

YES

S6

Restrict operation
of video/audio
output unit

NO

S7a

Perform normal
reproduction

## Fig.3

# Fig.4

```
                    ┌─ S1
       ╱Operation╲                YES
      ╱ of reception unit can be ╲─────────────┐
       ╲    restricted?   ╱                    ▼
         ╲           ╱                  ┌──────────── S2
             │ NO                       │ Restrict operation
             │                          │ of reception unit
             ▼                          └──────────────────
                    ┌─ S3
       ╱Operation╲                YES
      ╱ of decoding unit can be ╲──────────────┐      ┌─ S4b
       ╲    restricted?   ╱                     ▼
         ╲           ╱                  ┌──────────────────
             │ NO                       │ Restrict operations
             │                          │ of decoding unit
             ▼        ┌─ S5             │ and storage unit
       ╱Operation╲                      └──────────────────
      ╱ of video/audio output unit ╲ YES
       ╲ can be restricted ╱─────────────┐        ┌─ S6b
         ╲    ?      ╱                    ▼
             │ NO                 ┌──────────────────
             │                    │ Restrict operations of
             ▼  ┌─ S7b            │ video/audio output unit
       ┌──────────────┐          │ and storage unit
       │  Control     │          └──────────────────
       │ storage unit │
       └──────────────┘
```

## Fig.5(a)

> Since the amount of remaining battery power is small, received contents data (video,audio data) cannot be completely reproduced up to the end.
> Therefore, only storage of the contents data will be carried out without reproducing the data.. Please view the contents data after battery recharge.

Mpu1

## Fig.5(b)

> Since the amount of remaining battery power is small, received contents data (video,audio data) cannot be completely stored up to the end.
> Therefore, please select one from the following storage methods.
>
> 1.Store the received contents data up to some midpoint.
> 2.Store the received contents data up to the end with reduced bit rate.
> 3.Do not perform storage of the contents data.

Mpu2

## Fig.6

EP 1 461 954 B1

## Fig.7

## Fig.8

# Fig.9

file attribute
information
Iaf

data attribute
information
Iad

time attribute
information
Iat1

contents attribute
information
Iac1

time attribute
information
Iat2

contents attribute
information
Iac2

```
<DataDescription>

<data src="http://www.news.net/sport.mp4"/>

<time begin="Os" end="30s">

  <priority="high">

/>

<time begin="3Os" end="60s">

  <priority="low">

/>
    .
    .
    .
    .
    .
```

Drec

Fig.10

EP 1 461 954 B1

## Fig.11

file attribute information Iaf
data attribute information Iad
time attribute information Iat1
contents attribute information Iac1
contents attribute information Iac2
time attribute information Iat2
contents attribute information Iac3
contents attribute information Iac4

```
<DataDescription>

<data src="http://www.news.net/sport.mp4"/>

<time begin="Os" end="30s">

  <category="sports">

  <date="latest">          Vat(1)

/>

<time begin="3Os" end="60s">

  <category="weather">

  <date="latest">          Vat(2)

/>
  .
  .
  .
  .
```

Dred

# Fig.12

file attribute information Iafu — <UserPreference>

preference attribute information Iafv1 — <category>

    "sports"=3 — FV(1)

AV(1)

    "finance"=3 — FV(2)

AV(2)

    "politics"=2 — FV(3)

AV(3)

    "weather"=1 — FV(4)

AV(4)

preference attribute information Iafv2 — <date>

    "latest"=3 — FV(5)

AV(5)

    "new"=2 — FV(6)

AV(6)

    "old"=1 — FV(7)

AV(7)

preference attribute information Iafv3 — <priority>

preference attribute information Iafv4 — <generation>

preference attribute information Iafv5 — <popularity>

preference information values FV(y)
3 : high
2 : medium
1 : low

Dfvd

## Fig.13

## Fig.14

| number of attribute to be judged Nac / importance of data (judgement result) | 1 | 2 | 3 |
|---|---|---|---|
| HIs — high | $3 \leqq \Sigma FV(y)$ | $5 \leqq \Sigma FV(y)$ | $7 \leqq \Sigma FV(y)$ |
| MIs — medium | $2 \leqq \Sigma FV(y) < 3$ | $3 \leqq \Sigma FV(y) < 5$ | $5 \leqq \Sigma FV(y) < 7$ |
| LIs — low | $\Sigma FV(y) < 2$ | $\Sigma FV(y) < 3$ | $\Sigma FV(y) < 5$ |

## Fig.15

Vac(1)  Vac(2)  Vac(3)

contents attribute information Iac

| category= "sports" | category= "weather" | category= "music" |

0        30        60        90    time (s)

HIs     MIs     LIs

judgement result

| importance ="high" | importance ="medium" | importance ="low" |

operation restriction

| decode all frames | decode only I frames | decode only audio data |

Ocont1   Ocont2   Ocont3

# Fig.16

EP 1 461 954 B1

Fig.17

Fig.18(a)

Fig.18(b)

Fig.18(c)

Fig.19

coded
multimedia
data
(server S)

Md

100

reception
unit

101

Rd

memory

102

Rd

decoding
unit

103

Dd

video/audio
output unit

104

110

Bp

power supply
unit
(battery)

105